(19) Europäisches Patentamt
European Patent Office
Office européen des brevets

(11) **EP 4 538 684 A1**

(12) **EUROPEAN PATENT APPLICATION**
published in accordance with Art. 153(4) EPC

(43) Date of publication:
**16.04.2025 Bulletin 2025/16**

(21) Application number: **23819467.4**

(22) Date of filing: **27.03.2023**

(51) International Patent Classification (IPC):
***G01N 21/892*** *(2006.01)* ***H04N 1/028*** *(2006.01)*
***H04N 1/053*** *(2006.01)* ***H04N 1/19*** *(2006.01)*

(52) Cooperative Patent Classification (CPC):
**G01N 21/892; H04N 1/028; H04N 1/053; H04N 1/19**

(86) International application number:
**PCT/JP2023/012244**

(87) International publication number:
**WO 2023/238480 (14.12.2023 Gazette 2023/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.06.2022 JP 2022093007**

(71) Applicant: **Vienex Corporation**
**Kanonji-shi, Kagawa 768-0021 (JP)**

(72) Inventors:
- **WATANABE, Ryuta**
  **Kanonji-shi, Kagawa 768-0021 (JP)**
- **IWASAKI, Osamu**
  **Kanonji-shi, Kagawa 768-0021 (JP)**

(74) Representative: **Mewburn Ellis LLP**
**Aurora Building**
**Counterslip**
**Bristol BS1 6BX (GB)**

(54) **OPTICAL LINE SENSOR**

(57) A plurality of light receiving lenses 11 are arranged along a main scanning direction. A plurality of light receiving elements are arranged in a line along the main scanning direction, and receive light transmitted through the plurality of light receiving lenses 11. The plurality of light receiving elements form at least two rows of reading lines L. The light receiving lenses 11 constitute a telecentric optical system, and a width W1 in a sub-scanning direction is smaller than a width W2 in the main scanning direction.

FIG. 3

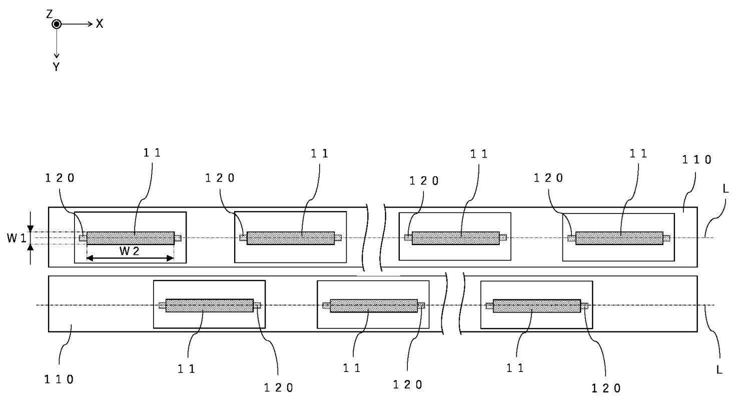


EP 4 538 684 A1

## Description

TECHNICAL FIELD

The present invention mainly relates to an optical line sensor that detects scratches and defects on a surface of a thin inspection object such as a printed matter or a film and scratches and defects inside a transparent film.

BACKGROUND ART

Application of contact-type optical sensors (hereinafter, called a CIS), which have been used in an inspection machine that discriminates authenticity of banknotes or a flatbed scanner such as a copying machine for business use or a printer scanner for home use, to a so-called surface inspection machine that targets, as an inspection target, checking printing performance of printed matter, surface inspection in a manufacturing process of thin and wide film products, inspection of labels attached to various beverage containers, food containers, cans, and the like has been studied, and some of them have been commercialized.

However, a CIS to which a SELFOC lens ("SELFOC" is a registered trademark, the same shall apply hereinafter) is applied still has a short operation distance (hereinafter, W.D.), and a CIS with a long W.D. is desired in order to avoid contact in a scene used in a process. In addition, in inspection of paper sheets such as banknotes, even if the depth of field is relatively shallow, it can withstand use, but in a manufacturing process of the inspection object, a CIS having a deep depth of field is also strongly desired because of a large fluctuation in an optical axis direction of the inspection object.

A typical CIS having a deep depth of field is a telecentric optical system using a mirror optical system as presented in Patent Documents 1 to 5. It can be seen from the patent documents that the optical system is very complicated. It is very difficult to manufacture the optical system and operate the optical system as a product. That is, at the time of manufacturing, the process becomes complicated, and manufacturing stability and cost increase become problems. Even after commercialization, there is still a problem that the optical axis is deviated because of a complicated optical system due to a change in environment or a change with time, and performance is easily degraded as compared with a CIS having a conventional simple structure.

Therefore, it is conceivable to improve W.D. and the depth of field by using a refractive lens using glass or resin without using the telecentric reflection optical system. As for the optical system of the refraction system, a certain level of solution has been proposed as presented in Patent Document 6 and Patent Document 7. For example, in Patent Document 6, an optical system having a deep depth of field is achieved by arranging one telecentric refractive optical system separately in a line sensor in a staggered arrangement and arranging lenses that are the refractive optical system apart from each other to form an array. In Patent Document 7, a method of preventing crosstalk between lenses by providing a partition plate between spaced lenses has been studied. In Patent Document 6 and Patent Document 7 described above, it is possible to improve the depth of field and prevent crosstalk between lenses, but a normal telecentric refractive optical system is large in size and is difficult to be made compact. In the partition plate presented in Patent Document 7, a missing pixel occurs at the time of reading, and reading becomes incomplete. Furthermore, a solution of shading that one lens has in principle caused by the lens being spaced apart is not presented. A suppression method of a so-called ripple in a reading line direction is also not mentioned. Moreover, the refractive optical system method has not been realized so far.

Furthermore, an inspection machine using a camera lens such as a line camera, which is a method different from the above method, is large in size, and a large number of them are required in order to cope with a wide inspection object at a manufacturing site. Therefore, since the entire device becomes very large and the cost thereof is enormous, it is difficult to dispose the device in each process of a factory.

In order to solve the above problem, there is a demand for an optical line sensor including an illumination system that is small in size and inexpensive that can be introduced into each process of a factory, uses a new refractive system lens having a long W.D. and a deep depth of field, and uses a new suppression method for a ripple, which is optical unevenness on a light receiving sensor due to shading of individual lenses.

PRIOR ART DOCUMENTS

PATENT DOCUMENTS

Patent Document 1: Japanese Patent Application Laid-Open No. 2018-019334
Patent Document 2: Japanese Patent Application Laid-Open No. 2018-152713
Patent Document 3: Japanese Patent Application Laid-Open No. 2009-244500

Patent Document 4: Japanese Patent Application Laid-Open No. 2018-019334
Patent Document 5: Japanese Patent Application Laid-Open No. 2018-022948
Patent Document 6: Japanese Patent Application Laid-Open No. 2009-246623
Patent Document 7: Japanese Patent Application Laid-Open No. H5-14600

## SUMMARY OF THE INVENTION

### PROBLEMS TO BE SOLVED BY THE INVENTION

Therefore, an object of the present invention is to achieve an optical line sensor made compact and having a deep depth of field.

### MEANS FOR SOLVING THE PROBLEMS

An optical line sensor according to the present invention is an optical line sensor that reads, in a reading line extending in a main scanning direction, an inspection object conveyed in a sub-scanning direction, and includes a plurality of light receiving lenses and a plurality of light receiving elements. The plurality of light receiving lenses are arranged along the main scanning direction. The plurality of light receiving elements are arranged in a line along the main scanning direction, and receive light transmitted through the plurality of light receiving lenses. The plurality of light receiving elements form the reading line of at least two or more rows. The light receiving lenses constitute a telecentric optical system, and have a width in the sub-scanning direction smaller than a width in the main scanning direction.

### EFFECTS OF THE INVENTION

According to the present invention, it is possible to achieve an optical line sensor having a deep depth of field by using a telecentric optical system. Since the width in the sub-scanning direction of the light receiving lens is smaller than the width in the main scanning direction, the light receiving lenses can be arranged close to the sub-scanning direction, and as a result, the optical line sensor can be made compact. If the light receiving lens is arranged close to the sub-scanning direction, the light receiving element can also be arranged close to the sub-scanning direction, and therefore it becomes possible to simplify the processing (e.g., image synthesis processing) of an image of the inspection object obtained based on an output signal from the light receiving element.

## BRIEF DESCRIPTION OF THE DRAWINGS

FIG. 1 is a cross-sectional view of a typical CIS.
FIG. 2 is an exploded perspective view of a CIS linear illumination optical system.
FIG. 3 is a schematic diagram of a light receiving system in which the visual fields of light receiving lenses do not overlap in a case where the light receiving lenses are arranged to act as monocular lenses.
FIG. 4 is a schematic diagram illustrating another example of a light receiving system in which a plurality of light receiving element arrays are arranged.
FIG. 5 is a schematic diagram illustrating still another example of a light receiving system in which a plurality of light receiving element arrays are arranged.
FIG. 6 is a graph showing a relationship between N.A. and a diffraction limit for each wavelength.
FIG. 7A is a graph showing a relationship between an effective diameter of a SELFOC lens A and a confusion circle diameter.
FIG. 7B is a graph showing a relationship between an effective diameter of a SELFOC lens B and a confusion circle diameter.
FIG. 7C is a graph showing a relationship between an effective diameter of a SELFOC lens C and a confusion circle diameter.
FIG. 8A is a graph showing a relationship between an effective diameter of a rod lens A and a confusion circle diameter.
FIG. 8B is a graph showing a relationship between an effective diameter of a rod lens B and a confusion circle diameter.
FIG. 8C is a graph showing a relationship between an effective diameter of a rod lens C and a confusion circle diameter.
FIG. 8D is a graph showing a relationship between an effective diameter of a rod lens D and a confusion circle diameter.
FIG. 9A is a schematic diagram illustrating an example of an arrangement method in a case of using an RGB-LED or an RGB-LD (laser diode; semiconductor laser) as a light source.

FIG. 9B is a side view illustrating a specific example of an arrangement method in a case of using an LD as a light source.

FIG. 10A is a schematic diagram illustrating a positional relationship between a light source and a light receiving lens in a case where a light receiving element array has two rows.

FIG. 10B is a view illustrating a relationship between a light amount distribution of the light source (on an inspection surface) in a main scanning direction, a light amount distribution on a light receiving element surface, and shading of a light receiving lens.

FIG. 10C is a graph ($\sqrt{A}$ = 0.077) of a light receiving system MTF for each lens diameter.

FIG. 10D is a graph ($\sqrt{A}$ = 0.154) of a light receiving system MTF for each lens diameter.

FIG. 10E is a graph of an MTF of a light receiving optical system in which a refractive index distribution constant $\sqrt{A}$ is $\sqrt{A}$ = 0.1027.

FIG. 11 is a graph showing MTF characteristics at the time of defocus.

FIG. 12A is a schematic diagram illustrating a modification of a light receiving system.

FIG. 12B is a schematic diagram illustrating a modification of the light receiving system.

FIG. 12C is a schematic diagram illustrating a modification of the light receiving system.

FIG. 12D is a schematic diagram illustrating a modification of the light receiving system.

FIG. 12E is a schematic diagram illustrating a modification of the light receiving system.

FIG. 12F is a schematic diagram illustrating a modification of the light receiving system.

FIG. 12G is a schematic diagram illustrating a modification of the light receiving system.

FIG. 12H is a schematic diagram for explaining a position of an optical axis in the light receiving system.

FIG. 12I is a schematic diagram for explaining a position of an optical axis in the light receiving system.

FIG. 13 is a view illustrating a light intensity distribution on a light receiving surface of a light receiving element array in a case where a light intensity distribution of a light source in a case where a lens end portion is a parallelogram is flat.

FIG. 14 is a view illustrating details of a light intensity distribution in the vicinity of a coupling portion between adjacent light receiving lenses.

FIG. 15 illustrates a light intensity of a light receiving region in the example of FIG. 12E, and schematically illustrates a reason why no signal missing portion occurs.

## MODE FOR CARRYING OUT THE INVENTION

### 1. Overall configuration of optical line sensor

A typical CIS is illustrated in FIG. 1, and similarly, a CIS linear illumination optical system is illustrated in FIG. 2. FIG. 1 illustrates a cross-sectional view in the vicinity of a center portion in the longitudinal direction of the CIS. On the other hand, FIG. 2 is an exploded perspective view. The X direction is the main scanning direction, and the Y direction is the sub-scanning direction. The Z direction is orthogonal to the X direction and the Y direction. A light source unit 10 having a line shape is an illumination optical system having a light amount distribution elongated in the main scanning direction.

In the CIS illustrated in FIG. 1, two housings 16 are arranged to face each other across a focal plane (inspection surface) 20. Each housing 16 is internally provided with the light source unit 10 having a line shape for illuminating the inspection object on the focal plane 20. One of the housings 16 is internally provided with a light receiving lens 11 and a light receiving unit 12, and light from the inspection object having been illuminated is guided to the light receiving unit 12 by the light receiving lens 11. The light receiving lens 11 forms an image of light from the inspection object onto the light receiving unit 12. In the CIS illustrated in FIG. 1, one of the two light source units 10 is arranged on the light receiving unit 12 side with respect to the focal plane 20, and the other is arranged on the opposite side to the light receiving unit 12 side.

The light receiving unit 12 is mounted on a substrate 13 fixed to one of the housings 16. Light having passed through the light receiving lens 11 is received by a light receiving surface 12A of the light receiving unit 12, and a signal corresponding to a light reception amount is output from the light receiving unit 12. When the inspection object is conveyed in the one direction Y along the focal plane 20, light from the inspection object is continuously received by the light receiving unit 12, and an image (color image, fluorescence image, or the like) of the inspection object is obtained based on an output signal from the light receiving unit 12. As described above, the inspection object conveyed in the sub-scanning direction (Y direction) is read, in a reading line configured by the light receiving surface 12A of the light receiving unit 12, by the light receiving unit 12 extending in the main scanning direction (X direction).

Light B3 emitted from one light source unit 10 is transmitted through a protective glass 14 fixed to the housing 16, reflected by a reflection member 17A provided on an inner surface of a protective glass 14A fixed to the other housing 16, and guided to the focal plane 20. An arbitrary position from the focal plane 20 to the light receiving unit 12 is provided an ultraviolet light blocking filter (UV cut filter) 15 that blocks ultraviolet light from entering the light receiving unit 12. A color filter 18 that allows visible light in a specific wavelength range to pass is provided between the light receiving unit 12 and the ultraviolet light blocking filter 15. A substrate 5 for fixing a light source 103 (ultraviolet light source, visible light source, or the like) included in the light source unit 10 is installed in a position facing the bottom surface of the light source unit 10 in one of the housings 16.

In the examples illustrated in FIGS. 1 and 2, the light source unit 10 includes a light guide body 101 that is transparent extending along a longitudinal direction L, the light source 103 provided near one end surface in the longitudinal direction L, and a cover member 102 for holding each side surface of the light guide body 101. Light emitted from the light source 103 enters the light guide body 101, appropriately reflected by a light diffusion pattern P while propagating through the light guide body 101, and emitted from a light exit surface in an arrow direction to illuminate the inspection object as linear illumination light. The depth of field of such a CIS is shallow, and in a case where the inspection object is thick, it is difficult to perform inspection in the entire thickness direction, and the W.D. is narrow. Therefore, the CIS comes into contact with the inspection object, and the inspection itself is not established in many cases.

In the CIS as described above, for example, a SELFOC (manufactured by Nippon Sheet Glass Corporation) lens array is used as the light receiving lens 11. The SELFOC lens array is a lens array of upright and unit magnification. In the lens array, cylindrical SELFOC lenses are stacked in bales to form a multi-lens. An advantage of the multi-lens is that so-called lens brightness can be made brighter than a single lens. That is, the F-number in a case where a plurality of single lenses are arranged side by side to form a multi-lens is smaller than the F-number of the single lens. This is because the effective F-number becomes small at a point where the focal position of one lens at an arbitrary position coincides with the focal position of a lens around the lens. Conversely, in an upright lens system, it means that a numerical aperture (hereinafter, N.A.) is larger in an array than in a single lens. This property is a major reason why the SELFOC lens array is used for the CIS.

The advantage of the CIS as described above becomes a disadvantage from the viewpoint of the depth of field and a depth of focus. As with monocular lenses, the larger the numerical aperture is, the shallower the depth of field is. For example, in a microscope objective lens, it is well known that the depth of field becomes shallow as the magnification increases, that is, the N.A. increases. Also in a camera lens, in a distant view and a near view, the length of the depth of field is clearly indicated, and adjustment is performed with a diaphragm in order to secure the depth of field. That is, N.A. is changed to obtain a desired depth of field. In addition, an upright multi-lens typified by the SELFOC lens has a structure in which the image is easily blurred when the inspection object changes in the optical axis direction as compared with a monocular lens because the optical axes of the lenses are different and intersect with each other. The above is a major disadvantage of the multi SELFOC lens array stacked in bales. An example obtained as a result of examining how the depth of field of a compact optical line sensor can be deepened will be described below. In the following example, the light receiving lens 11 constitutes a telecentric optical system.

2. Example of light receiving system

First, a first method is to provide an optical line sensor with an array structure that can be regarded as a monocular lens as illustrated in FIG. 3. FIG. 3 is a schematic diagram of a light receiving system in which the visual fields of light receiving lenses 11 do not overlap. In FIG. 3, the light receiving lenses 11 are arranged in a staggered manner by arranging the light receiving lenses 11 separately in the main scanning direction (X direction) and separating the light receiving lenses 11 in the sub-scanning direction (Y direction) so that the visual fields of the light receiving lenses 11 do not overlap.

That is, the plurality of light receiving lenses 11 not stacked in bales but arranged along the main scanning direction (X direction) are arranged apart from each other. The plurality of light receiving lenses 11 arranged along the main scanning direction (X direction) are integrally held by a lens holder 110. A light receiving element array 120 configured by arranging a plurality of light receiving elements (not illustrated) in a line shape along the main scanning direction (X direction) are arranged at a position facing each light receiving lens 11 in the Z direction. That is, one light receiving element array 120 is configured by arranging the plurality of light receiving elements in an array along the main scanning direction (X direction). Each light receiving element receives light transmitted through each light receiving lens 11.

In this example, the light receiving element array 120 is arranged in association with each light receiving lens 11. Thus, the light receiving element arrays 120 including short sensors are alternately arranged in a staggered manner along the main scanning direction (X direction). The plurality of light receiving element arrays 120 arranged along the main scanning direction (X direction) form a reading line L of one row, and in the example of FIG. 3, forms the reading line L of two rows. The lens holder 110 is not limited to the configuration provided in association with each reading line L, and may have a configuration in which the plurality of light receiving lenses 11 corresponding to the respective reading lines L are integrally held by one lens holder.

As illustrated in this FIG. 3, by making one light receiving lens 11 correspond to one light receiving element array 120, the plurality of light receiving lenses 11 as many as the number corresponding to the plurality of light receiving element arrays 120 may be arranged. The optical axis of the light transmitted through the light receiving lenses 11 and guided to the light receiving element arrays 120 may penetrate a substantially center portion in the main scanning direction (X direction) of each of the light receiving element arrays 120 in a one-to-one correspondence. In this method, a plurality of rows of the plurality of light receiving element arrays 120 are arranged in the sub-scanning direction (Y direction). That is, the plurality of rows of light receiving element arrays 120 are arranged apart in a perpendicular direction (Y direction) with respect to the array direction (X direction) of the light receiving elements.

In each light receiving lens 11, a width W1 in the sub-scanning direction is smaller than a width W2 (lens diameter) in the main scanning direction. That is, each light receiving lens 11 has an elongated shape along the main scanning direction. The width W1 in the sub-scanning direction of the light receiving lenses 11 corresponds to the visual field in the sub-scanning direction of the light receiving lenses 11. The width W2 in the main scanning direction of the light receiving lenses 11 corresponds to the visual field in the main scanning direction of the light receiving lenses 11. The width W1 in the sub-scanning direction of the light receiving lenses 11 is preferably set such that N.A. satisfies 0.001 < N.A. < 0.05. In this example, the light receiving lenses 11 have an identical shape, and are each formed in a rectangular shape as viewed from a direction (Z direction) orthogonal to the main scanning direction and the sub-scanning direction. However, each light receiving lens 11 is not limited to a rectangle, and may have an oval shape, an elliptical shape, or another shape.

The plurality of light receiving lenses 11 are arranged apart from one another by the width W2 or less in the main scanning direction of the light receiving lens. That is, it is preferable that the plurality of light receiving lenses 11 are arranged separately from one another within a visual field dimension (within a visual field range) in the main scanning direction of the light receiving lens 11. As in the example of FIG. 3, the visual fields of the light receiving lenses 11 may be superimposed in the sub-scanning direction. In this case, a pixel output from a light receiving element may be subtracted for the light receiving element in a part where the visual fields of the plurality of light receiving lenses 11 overlap. For example, an image (light reception amount of light transmitted through one light receiving lens 11) of one light receiving lens 11 may be excluded from data output from the light receiving element, or the pixel output from the light receiving element may be set to a substantially half output value at the time of image synthesis. Use of a plurality of light receiving element arrays (light receiving element array 120) can prevent occurrence of missing pixels more reliably than in the case of a light receiving element array of one line.

FIG. 4 is a schematic diagram illustrating another example of a light receiving system in which the plurality of light receiving element arrays 120 are arranged. In the example of FIG. 4, the light receiving lenses 11 and the light receiving element arrays 120 do not correspond to each other on a one-to-one basis, but a plurality of (two in this example) light receiving lenses 11 arranged in the main scanning direction correspond to one light receiving element array 120.

The plurality of light receiving lenses 11 corresponding to one light receiving element array 120 are adjacent in the main scanning direction. However, the plurality of light receiving lenses 11 corresponding to one light receiving element array 120 may be separated from each other, and in this case, may be separated from each other by the width W2 or less in the main scanning direction of the light receiving lens 11. A light shielding member may be provided between the light receiving lenses 11.

FIG. 5 is a schematic diagram illustrating still another example of a light receiving system in which the plurality of light receiving element arrays 120 are arranged. In FIG. 5, the plurality of (two in this example) light receiving element arrays 120 including long sensors of the same length (length corresponding to the entire length in the main scanning direction) are arrange in parallel side by side in the sub-scanning direction. As illustrated in this FIG. 5, by making one light receiving element array 120 correspond to the plurality of light receiving lenses 11 arranged in the main scanning direction (X direction), the plurality of light receiving element arrays 120 may be arranged by the number of rows of the light receiving lenses 11 in the sub-scanning direction (Y direction).

In any of FIGS. 3 to 5, since the width W1 in the sub-scanning direction of the light receiving lens 11 is smaller than the width W2 in the main scanning direction, the light receiving lens 11 can be arranged close to the sub-scanning direction, and as a result, the optical line sensor can be made compact. As described above, the short light receiving element arrays 120 may be used in a staggered arrangement (see FIGS. 3 and 4), the light receiving element arrays 120 of two rows may be disposed apart (see FIG. 5), or, not limited to this, more light receiving element arrays 120 may be arranged apart in the sub-scanning direction (Y direction).

## 3. Long focus of light receiving lens

Next, long focus of the light receiving lens will be described. In the conventional SELFOC lens, emphasis is placed on compactness and cost reduction of the CIS, and a lens having a shorter conjugation length has been required. However, this flow is a factor that facilitates reduction of an allowable depth of field. Moreover, the lens diameter is becoming smaller and smaller. In a case where the light receiving lens has a long focus, when a conventional light receiving lens is used, N.A. becomes extremely small. Therefore, an influence of diffraction increases, and blurring due to a diffraction limit is a dominant factor of optical resolution degradation rather than blurring due to geometric optical aberration that the light receiving lens itself has. Since the conventional CIS has a large N.A., occurrence of image blurring due to a diffraction limit can be ignored. However, in order to lengthen the W.D., it is necessary to extend the focal length of the light receiving lens, that is, the N.A. becomes small, and therefore, with the conventional lens diameter, as the focal length increases, the influence of diffraction also increases accordingly. In the present embodiment, a method is proposed in which the W.D. is lengthened by increasing the lens diameter, and the optical resolution is not degraded even when image blur due to a diffraction limit is reduced.

A diffraction limit d of Abbe is inversely proportional to the numerical aperture N.A. Since the optical system is in the air, the following Formula 1 is established using a wavelength λ in the air.

$$d = \lambda/N.A.\ (\text{Formula } 1)$$

FIG. 6 shows the relationship between the N.A. and the diffraction limit for each wavelength. In the light receiving lens 11 having the same lens parameter, if a so-called pitch of the light receiving lens 11 itself is shortened, the focal length is extended, and the influence of aberration also decreases.

The above indicates that it is necessary to further increase the lens diameter in order to provide the light receiving lens 11 with a long focus. By maintaining the N.A. identically, the influence of diffraction can be made equal to that of the light receiving lens 11 having a short focus. However, when the lens diameter is increased, the geometrical optical aberration increases. Therefore, in the light receiving lenses 11 having different lens parameters, it is necessary to examine a least confusion circle diameter when the lens diameter is increased. The wavelength λ was λ = 630 nm having a large diffraction limit diameter.

As a result of examination by the inventor of the present application, it has been found that it is sufficient to consider the relationship of the least confusion circle with respect to each focal length of a certain light receiving lens 11. For example, FIGS. 7A to 7C illustrate a case where a focal length f is f = 50 mm. Here, in a case where three types of SELFOC lenses (SELFOC lens A, SELFOC lens B, and SELFOC lens C) are used as the light receiving lens 11, FIG. 7A illustrates the relationship between the effective diameter of the SELFOC lens A and the confusion circle diameter, FIG. 7B illustrates the relationship between the effective diameter of the SELFOC lens B and the confusion circle diameter, and FIG. 7C illustrates the relationship between the effective diameter of the SELFOC lens C and the confusion circle diameter. In FIGS. 7A to 7C, solid lines indicate a total confusion circle, broken lines indicate a confusion circle due to diffraction, and dash-dot lines indicates a geometric optical confusion circle.

According to FIGS. 6 and 7A, the relationship between the least confusion circle and the diffraction limit, that is, the optical resolution in a certain lens diameter and focal length can be seen. Therefore, in the case of the light receiving lens 11 illustrated in FIG. 7A, as an effective diameter Φ increases, the confusion circle diameter decreases, and it can be understood that the effective diameter Φ may be 1.0 mm ≤ Φ ≤ 3.0 mm.

On the other hand, according to FIGS. 6 and 7B, since the geometric optical confusion circle is large and the degree of dependence due to diffraction is reduced, the confusion circle diameter of Φ = 1.0 mm is the smallest. Moreover, also when Φ = 1.0 mm, the confusion circle diameter is close to twice the light receiving lens 11 illustrated in FIG. 7A. The light receiving lens 11 illustrated in FIG. 7A is a SELFOC lens having a smaller aberration and a larger effective diameter than the light receiving lens 11 illustrated in FIG. 7B, and it can be seen that the light receiving lens 11 in FIG. 7A should be selected. Furthermore, in the light receiving lens 11 of FIG. 7A having the same focal length, N.A. can be at least 3 times greater than that of the light receiving lens 11 of FIG. 7B, that is, the light reception amount becomes 9 times or more, and hence the output of the light receiving element also becomes 9 times or more. Accordingly, shot noise dependent of the light reception amount of the light receiving element is also reduced to 1/3, and therefore the light receiving lens 11 illustrated in FIG. 7A is preferable also from the viewpoint of noise suppression. When the same noise amount is permitted, it can be said that the light receiving lens 11 of FIG. 7A can improve the scanning speed by 9 times as compared with the light receiving lens 11 of FIG. 7B.

According to FIG. 7C, similarly to the SELFOC lens A, the SELFOC lens C has less aberration and can have a large effective diameter.

Next, parameters of the SELFOC lenses A to C illustrated in FIGS. 7A to 7C are given in the following Table 1. The most important parameter in Table 1 is the refractive index distribution constant. The light receiving lens 11 having less aberration when the effective diameter is enlarged and the focal length is extended is the SELFOC lens A having the smallest refractive index distribution constant, and the light receiving lens 11 having the second smallest aberration is the SELFOC lens C. Needless to say, the light receiving lens 11 having a large effective diameter, being bright, and having less aberration is preferable in order to achieve high resolution and high speed inspection.

[Table 1]

| | Focal distance(mm) | On-axis refractive index | Refractive index distribution constant [1/mm] |
|---|---|---|---|
| **SELFOC lens A** | 5 0 | 1. 6 5 | 0. 0 7 7 |
| **SELFOC lens B** | | | 0. 1 5 4 |
| **SELFOC lens C** | | | 0. 1 0 3 |

Furthermore, when four types of plastic rod lenses (plastic gradient index lenses) are used as the light receiving lens 11, FIG. 8A illustrates the relationship between the effective diameter of the rod lens A and the confusion circle diameter, FIG. 8B illustrates the relationship between the effective diameter of the rod lens B and the confusion circle diameter, FIG. 8C illustrates the relationship between the effective diameter of the rod lens C and the confusion circle diameter, and FIG. 8D illustrates the relationship between the effective diameter of the rod lens D and the confusion circle diameter. In FIGS. 8A to 8D, solid lines indicate a total confusion circle, broken lines indicate a confusion circle due to diffraction, and dash-dot lines indicates a geometric optical confusion circle. Parameters of the rod lenses A to D illustrated in FIGS. 8A to 8D are illustrated in Table 2 below. It can be seen that the plastic rod lens also has a similar tendency to that of the SELFOC lens. Considering the refractive index of the plastic rod lens and the refractive index of the glass lens, the on-axis refractive index is preferably about 1.45 to 1.65.

[Table 2]

| | Focal distance(mm) | On-axis refractive index | Refractive index distribution constant(1/mm) |
|---|---|---|---|
| **Rod lens A** | 5 0 | 1. 4 9 1 | 0. 2 8 |
| **Rod lens B** | | | 0. 1 4 |
| **Rod lens C** | | | 0. 1 0 5 |
| **Rod lens D** | | | 0. 0 7 |

The above indicates that the refractive index distribution constant is a dominant factor of aberration. In an ideal gradient index lens, aberration decreases as the refractive index gradually changes. This is similar to that a sudden angle change is a cause of aberration even in a normal spherical lens. The sudden angle change means an increase in a high-order nonlinear effect when Snell'Law is subjected to polynomial expansion. That is, since deviation from paraxial optics increases, aberration increases. The inventor of the present application has found that the refractive index distribution constant is preferably 0.12 or less in order to achieve pixel resolution with a resolution of 400 dpi or more when the focal length or W.D. is approximately 50 mm or more and the effective diameter $\Phi$ is approximately $\Phi \geq 1.0$ mm.

4. Modification of light receiving lens

Not limited to a gradient index lens such as a SELFOC lens or a plastic rod lens, the light receiving lens 11 in the present invention can be other lenses, for example, in an achromat (achromatization), an apochromat, and the like, a lens in which aberrations due to a nonlinear effect in the gradient index lens are made equal, that is, spherical aberrations, coma aberrations, astigmatism are made equal in consideration of cost, or a telecentric refractive optical system can be used with similar arrangement and dimensions (aperture) in place of a gradient index lens such as a SELFOC lens or a plastic rod lens having an equal aberration and diffraction limit due to a nonlinear effect in the gradient index lens. The same applies to the light receiving lens 11 that forms an inverted image described later.

The above-described optical system is centered on the upright lens, but may be an inverted optical system in a case where the visual fields do not overlap. That is, the plurality of light receiving lenses 11 may be configured to form an inverted image. A lens array with a two-row system can adopt an inverted optical system. In the case of the inverted optical system, since an image is in an inversion symmetry about the optical axis, the inverted image may be converted into an upright image by image processing at the time of image synthesis. That is, the inverted image of the plurality of light receiving lenses 11 may be inverted and converted into an upright image, and then image synthesis processing may be performed. In the process of the operation, the necessity or unnecessity of an overlapping part may be determined and corrected from a correction algorithm, and conversion into an upright image may be performed from the determined relationship between determined pixels. Alternatively, in an inspection in a case of not constructing an image, it is only necessary to detect a scratch or a defect, and thus it is not necessary to perform image synthesis and image processing, and a detection part on an inspection surface may be superimposed. In the case of superimposition, the position is corrected in advance by a correction chart.

Furthermore, in a case of an inverted refractive optical system, in the signal processing for each light receiving element, for example, data obtained from one of two rows of light receiving element arrays in a staggered arrangement so as to be separated in the sub-scanning direction may be acquired longer, data obtained from the other light receiving element array may be acquired shorter, and image synthesis may be performed after the acquired image is inverted to an upright image. Alternatively, after inverted image data of each light receiving element is converted into an upright image, a correction coefficient may be multiplied to or subtracted from the overlapping part at the time of image synthesis.

Specifically, in the inverted refractive optical system, the plurality of light receiving element arrays may be light receiving element arrays shorter than the plurality of reading lines arranged in the reading line of two rows. The light receiving element array arranged in one reading line and the light receiving element array arranged in the other reading line may be alternately arranged in a staggered manner along the main scanning direction. Since such a configuration is similar to the case of the upright refractive optical system described in FIG. 3, a detailed description thereof will be omitted.

In this case, as illustrated in FIG. 3, the plurality of light receiving elements constitute the plurality of light receiving element arrays 120 by being arranged in an array of two or more rows. The plurality of light receiving element arrays 120 are arranged apart from each other by the width W2 or less in the main scanning direction of the light receiving lens 11 in the direction orthogonal to the reading line L. The plurality of light receiving lenses 11 as many as the number corresponding to the plurality of light receiving element arrays 120 are arranged, and the optical axis of the light transmitted through the light receiving lenses 11 and guided to the light receiving element arrays 120 penetrates the substantially center portion of the light receiving element arrays 120. However, the optical axis of the light transmitted through the light receiving lenses 11 and guided to the light receiving element arrays 120 may penetrate a position away in parallel with the sub-scanning direction from the substantially center portion of the light receiving element arrays 120.

5. Configuration of illumination optical system

In the present example, the focal length f of the light receiving lens 11 is f = 50 mm, N.A. is N.A. = 0.01, 0.02, 0.025, and 0.03, and the refractive index distribution constant $\sqrt{A}$ is $\sqrt{A} = 0.077$. Regarding the light source 103, since the W.D. is longer than that of the conventional CIS by 10 times or more, in the unit magnification system, inspection surface illuminance needs to be 100 times or more. Therefore, for example, a high-luminance white LED array is used as the light source 103. That is, the plurality of light sources 103 may be configured to include a white LED. When a semiconductor laser in a visible range is used as the light source 103, an emitted beam is enlarged in the main scanning direction and collimated in the sub-scanning direction, thereby reducing light quantity unevenness at the time of irradiation.

FIG. 9A illustrates an example of an arrangement method in a case where an RGB-LED or an RGB-LD (laser diode; semiconductor laser) is used as the light source 103. As described above, the plurality of light sources 103 may be configured to include the red LED (R), the green LED (G), and the blue LED (B), or may be configured to include a laser diode. In FIG. 9A, the plurality of light sources 103 are mounted on a light source substrate 134, and the light source substrate 134 is attached with a heatsink 135. A beam emitted from each light source 103 is collimated by a condenser lens 104 having an ellipsoidal shape and lens powers different between in the main scanning direction and in the sub-scanning direction, and is applied to the inspection object. Here, the condensing lens 104 having an ellipsoidal shape has been described, but any lens may be used as long as the lens power is appropriately different between in the main scanning direction and in the sub-scanning direction. Note that the power of a lens is the reciprocal of the focal length and is a measure representing the refractive power of the lens.

Alternatively, the LD may be a normal collimator lens as long as an end surface emission type LD in which a spread angle of an emission beam of the LD itself is different between in the horizontal direction and in the vertical direction is used. FIG. 9B is a side view illustrating a specific example of an arrangement method in a case of using the LD as the light source 103. In this case, the LD having the larger spread angle is arranged in parallel to the main scanning direction. Beams emitted from a red LD 131, a green LD 132, and a blue LD 133 constituting the light source 103 are collimated by the condenser lenses 104 associated respectively, and then, are focused on the inspection surface by a cylindrical lens 105. In this way, each color of RGB is irradiated to substantially the same position in the sub-scanning direction, and color unevenness with respect to the sub-scanning direction can be reduced. On the other hand, light emitted by the light source 103 such as an LED or an LD and diffusely reflected by the inspection surface forms an image on the light receiving element array by the light receiving lens system. As the light receiving element, in the unit magnification optical system, an element size of 62 $\mu$m corresponding to 400 dpi to an element size of 42 $\mu$m equivalent to 600 dpi is used. When the element size of 600 dpi or more is used, the power of the illumination light may be increased accordingly. As described above, the plurality of light sources 103 may include the light sources 131 to 133 having a plurality of different wavelengths, and have a configuration in which the plurality of light sources 103 in one unit are arranged in the main scanning direction (X direction) with the light sources 131 to 133 as one unit.

Furthermore, even if the radiance per unit area is the same, a different size of a light receiving element is synonymous with a different area of a light emitting unit, and therefore the light reception amount decreases in inverse proportion to substantially the square of the light receiving element area. The illumination light amount is determined in consideration of the above. When the element size decreases, the light reception amount decreases in inverse proportion to the element area in the same accumulation time. This is a physical property of the semiconductor light receiving element, and in order to maintain S/N, the illumination light may be increased to increase the power density, and the number of generated electrons generated per unit time may be the same. Due to this, even if the size of the light receiving element decreases, the shot noise can be maintained at the same level as the light receiving element having a large size. The light received by the light receiving element depends not only on the illuminance of the inspection surface but also on the range viewed by the light receiving element when the light is received. Needless to say, if a light receiving solid angle is different and the angle thereof decreases, the light reception amount also decreases, and if the inspection surface is a perfectly diffusing surface, the light reception amount is in accordance with a so-called cos $\theta$ law. The light diffusely reflected from the inspection surface is captured by the light receiving lens and condensed on the light receiving element, and an output signal thereof is output from the light receiving element. The output signal from the light receiving element array is branched in parallel from serial to improve the processing speed and is transmitted to an image processing device.

FIG. 10A is a schematic diagram illustrating the positional relationship between the light source 103 and the light receiving lens 11, and illustrates a case where the light receiving element array 120 has two rows. FIG. 10A illustrates the arrangement of the light source 103 with respect to the light receiving lenses 11 and the light receiving element array 120 arranged in two rows. In the present example, the light source 103 is disposed substantially at the center portion of the reading line L of two rows. The light sources 103 are arranged side by side in parallel to the reading line L. The optical axis of the light sources 103 connects an intersection with the optical axis of the light transmitted through the light receiving lenses 11 and guided to the light receiving element arrays 120 and is arranged at an arbitrary position on an imaginary plane intersecting with the optical axis of light transmitted through the plurality of light receiving lenses 11 and guided to the plurality of light receiving element arrays 120. In the present example, the focal length f of the light receiving lens 11 is f = 50 mm, and the lens diameter $\Phi$ is $\Phi$ = 4 mm (in consideration of the geometric optical aberration, the effective diameter $\Phi$ was set to $\Phi'$ = 2.5 mm using the aperture). In the present example, light is emitted from the light source 103 at an angle of about 45 degrees with respect to the inspection surface. Therefore, the distance between the light source 103 and the inspection surface is 70 mm in consideration of W.D. of the light receiving lens 11. In the present example, the LD is used, but an LED of each wavelength may be used.

The array pitch of the light sources 103 is matched with the distance between lenses, and the light source 103 is disposed at the position that is a substantially center portion between the light receiving lenses 11 adjacent to each other and is a substantially center portion of the reading line L of two lines at the same time. This makes it possible to further prevent missing of pixels on the inspection surface, and at the same time, possible to further reduce shading of the light receiving lens 11 and light amount unevenness of the light source 103. The lens pitch between the light receiving lenses 11 in each row was 7 mm. In this case, a substantial lens pitch is 3.5 mm.

FIG. 10B is a view illustrating the relationship between the light amount distribution of the light source 103 (on the inspection surface) in the main scanning direction, the light amount distribution on the light receiving element surface, and shading of the light receiving lens 11. In the layout of FIG. 10A, the light amount distribution on the light receiving element array 120 becomes flat as schematically illustrated in FIG. 10B, and a dynamic range of the light receiving element can be effectively used.

6. Ripple suppression method

Next, shading caused by the individual light receiving lenses 11 generates a ripple with respect to the reading line L direction, which eventually leads to narrowing of the dynamic range of the light receiving element, and a suppression method of this will be described.

First, the inspection object is irradiated with illumination light having a negative intensity distribution by the illumination system in advance. For example, a method of arranging the light source 103 between the adjacent light receiving lenses 11 does not completely give a shading suppression method corresponding to various light receiving lenses 11. That is, if there is shading unique to the individual light receiving lenses 11 and the light receiving lenses 11 are different, it is necessary to use an illumination optical system corresponding thereto. In the present embodiment, the condenser lens 104 having a large power in the main scanning direction is arranged. The light flux transmitted through the condenser lens 104 is then guided to the inspection object by a convergence lens such as the cylindrical lens 105, and forms, on the inspection object, a light intensity corresponding to shading of the light receiving lens 11. Then, by appropriately changing the position in the optical axis direction of the condenser lens 104 according to the shading of the light receiving lens 11, for example, if the inspection object is a white reference plate for calibration, the light intensity distribution on the light receiving element can be smoothed. The condenser lens 104 may have power in the sub-scanning direction. In short, it is only sufficient to completely suppress shading of the light receiving lens 11 and to simultaneously achieve an effective light intensity distribution in consideration of the focal length of the light receiving lens 11 with respect to the inspection object. That is, the lens power in the main scanning direction is preferably greater than the lens power in the sub-scanning direction. As the condenser lens 104, for example, a cylindrical lens, a lenticular lens, a Fresnel lens, a combination of a prism sheet and a spherical lens, or the like is preferable. Regarding the positional relationship with respect to the main scanning direction of the light source 103, the light source 103 may be arranged at an intermediate position of the light receiving lenses 11, or may be arranged on the optical axis of the light receiving lens 11. Furthermore, the light source 103 may be disposed at a position on the outer periphery of the light receiving lens 11. Furthermore, a lens having a power distribution in the main scanning direction is more preferable.

In the present embodiment, the condenser lens 104 condensing light fluxes from the plurality of light sources 103 is provided as one lens body, and power in the main scanning direction of the lens body is greater than power in the sub-scanning direction. However, the condenser lens 104 may be configured to include not single lens body but a first condenser lens and a second condenser lens. In this case, in the first condenser lens, the power in the main scanning direction may be greater than the power in the sub-scanning direction, and in the second condenser lens, the power in the sub-scanning direction may be greater than the power in the main scanning direction. The power in the main scanning direction may be adjustable by the first condenser lens and the second condenser lens.

In the condenser lens 104 including the first condenser lens and the second condenser lens as described above, the first condenser lens and the second condenser lens can be constituted by a cylindrical lens, a lenticular lens, a Fresnel lens, a prism array, or the like. For example, the first condenser lens may be a lenticular lens or a prism array. The second condenser lens may be a Fresnel lens or a cylindrical lens.

7. Parameter of light receiving lens

A graph of the light receiving system MTF for each lens diameter in the present embodiment is shown in FIG. 10C. As a comparative example, FIG. 10D shows a case of the refractive index distribution constant $\sqrt{A} = 0.154$. Cases where the effective diameter $\Phi$ is $\Phi = 1.0, 1.5, 2.0, 2.5$, and 3.0 mm are shown in the order of the solid line, the short broken line, the long broken line, and the dash-dot line. Note that the pixel dimension of the light receiving element is 42.3 $\mu$m in both the main scanning direction and the sub-scanning direction equivalent to 600 dpi.

In the present embodiment, in the effective diameter $\Phi$, under the condition that the refractive index distribution constant $\sqrt{A}$ is $\sqrt{A} = 0.077$, if the performance is about 30% at 12 lines/mm equivalent to 600 dpi, the MTF characteristics in the range of $\Phi$1.0 mm to $\Phi$3.0 mm are satisfied. On the other hand, the comparative example does not satisfy the MTF characteristics in all ranges with respect to the effective diameter $\Phi$. This indicates that aberration characteristics are more excellent when $\sqrt{A}$ is $\sqrt{A} = 0.077$ than when $\sqrt{A} = 0.154$. In the case of the focal length f = 50 mm, the MTF of the light receiving optical system in the case where the refractive index distribution constant $\sqrt{A}$ is $\sqrt{A} = 0.1027$ is obtained, and is shown in FIG. 10E. According to FIG. 10E, also in a case where $\sqrt{A}$ is $\sqrt{A} = 0.1027$, the MTF characteristics are satisfied in the range of $\Phi$1.0 mm to $\Phi$3.0 mm at 12 lines/mm equivalent to the resolution of 600 dpi.

When the light receiving lens 11 is a gradient index lens, the lens is preferably made of glass or resin. In this case, in lens parameters of the light receiving lens 11, it is preferable that an on-axis refractive index N0 is $1.45 \leq N0 \leq 1.65$, a refractive index distribution constant $\sqrt{A}$ is $0.05 \leq \sqrt{A} \leq 0.12$, and a focal length f is 50 mm $\leq f \leq$ 150 mm.

The light receiving lens 11 may be an achromate or an apochromat each in which a plurality of lenses are combined. In this case, a lens system in which only convex lenses are combined as the plurality of lenses, or a lens system in which a convex lens and a concave lens are combined as the plurality of lenses may be adopted. It is preferable that the focal length f of the plurality of lenses is 25 mm $\leq f \leq$ 250 mm, and the aperture $\Phi$ of the plurality of lenses is 2 mm $\leq \Phi \leq$ 50 mm.

Next, in order to improve the depth of field and the resolution, the light receiving lens system that is a reduction optical system will be given as an example. The configuration of the optical system is similar to that in FIG. 10A, and the magnification of the light receiving lens 11 is changed. That is, the relationship of the lateral magnification between the object point of the light receiving lens 11 and the image point is changed to 9 : 1 or 4 : 1. This increases the depth of field to three times that of the unit magnification system when the lateral magnification is 9 : 1, and to two times that of the unit magnification system when the lateral magnification is 4 : 1. When the depth of field is three times, the size of the light receiving element is 1/9 the size of the light receiving element of the unit magnification system. When the depth of field is two times, the size of the light receiving element is 1/4 the size of the light receiving element of the unit magnification system. In the present embodiment, a light receiving element having a size of 1/4 was used, and the depth of field was two times.

The MTF characteristics at the time of defocus of the reduction optical system in the present embodiment will be illustrated in the graph (solid line) of FIG. 11. As a comparative example, the MTF characteristics at the time of defocus of the unit magnification system will be illustrated in the graph (broken line) of FIG. 11. The comparison between the reduction system and the unit magnification system in the drawing indicates that the depth of field of the reduction optical system is about two times deeper than that of the unit magnification system. If the reduction ratio is S, the N.A. of the light receiving lens 11 increases by 1/S, which is the reciprocal thereof. Therefore, also when the lens diameter of the light receiving lens 11 is small, if the reduction ratio is increased according to the focal length, the effective N.A. is maintained, and therefore blurring due to a diffraction effect can be made constant.

In the present embodiment, since the focal length is f = 50 mm and the lateral magnification ratio is 1/4, the lens diameter Φ can be used up to Φ = 0.25 mm in principle. Since the same lens as in the case of FIG. 10A is used, the lens diameter Φ is Φ = 4 mm, and the effective diameter Φ' is Φ' = 2.5 mm. N.A. is four times as large as that in the case of FIG. 10A, which is the unit magnification system. Therefore, the light reception amount becomes 16 times, and it is possible to offset a decrease of 1/16 in the light reception amount due to the reduction in the size of the light receiving element to 1/4.

9. Telecentric optical system

Next, a telecentric optical system applied to the present embodiment will be described. Use of the telecentric optical system can achieve a configuration easy in assembly and small in temporal change. In the telecentric optical system, the light receiving lens 11 is arranged on both sides or one side across an aperture (light transmission unit). That is, the telecentric optical system is a both-side telecentric optical system in which the light receiving lenses 11 are arranged on both the inspection object side and the light receiving element array 120 side, or an object-side telecentric optical system in which the light receiving lens 11 is arranged only on the inspection object side.

In the both-side telecentric optical system, the light flux spreading thinly in parallel to the optical axis from the inspection object is transmitted through a front lens to become a parallel light flux, and the parallel light flux having passed through an aperture inserted after the front lens is transmitted through a rear lens to be focused on the light receiving elements of the light receiving element array 120.

As illustrated in FIG. 3 or FIG. 4, when the light receiving element arrays 120 are in a staggered arrangement in the sub-scanning direction, it is necessary to increase the memory capacity as the distance in the sub-scanning direction increases. As the memory capacity increases, the cost increases accordingly. In the present embodiment, by using the telecentric lens optical system, assuming that N.A. is about 0.03, in the case of a lens having a focal length of 50 mm, a conical light receiving solid angle connecting Φ = 3 mm and an object point in a main planar shape of the lens is obtained. Hence, a shortest distance Ls of the light receiving element arrays 120 in a staggered arrangement in the sub-scanning direction is enough to be Ls > 3 mm. Therefore, if the circular outer peripheral portion of a normal lens is formed into a rectangular outer peripheral portion by various processing or molding means, and the light receiving element arrays 120 are arranged with a narrow interval of the staggered arrangement as illustrated in FIG. 3 or FIG. 4, it is possible to satisfy the light receiving solid angle and to make the memory capacity compact at the same time. Note that the N.A. of the light receiving lens 11 is desirably about 0.001 to 0.05 from the viewpoint of the amount of illumination light. As described above, since the thickness of the light receiving lens 11 in the sub-scanning direction is determined by the solid angle defined by the N.A. of the telecentric optical system, it can be shortened in the sub-scanning direction and becomes compact.

10. Modification of light receiving system

Next, a modification of the light receiving system will be described with reference to FIGS. 12A to 12G. In the above embodiment, a configuration in which the plurality of light receiving lenses 11 are arranged in two rows in the sub-scanning direction has been described, but in FIGS. 12A to 12G, a configuration in which the plurality of light receiving lenses 11 are arranged in one row along the main scanning direction, specifically, a layout of the light receiving lenses 11 in one row and the light receiving element array 120 in a staggered arrangement will be described.

In a case where the reading line L of two rows is formed by arranging the light receiving element arrays 120 in a staggered manner, if the light receiving lenses 11 are also arranged in a staggered manner in two rows similarly to the light receiving element array 120, it is necessary to provide an interval in the sub-scanning direction of the light receiving element array 120 equal to or greater than the width in the sub-scanning direction of the light receiving lenses 11 in order to satisfy the required N.A. of the light receiving lens system. Therefore, as in FIGS. 12A to 12G, if the width of the rectangular lens is set so that the light receiving lens 11 satisfies the N.A. required for the light receiving system, and the number of rows is changed from two to one, the interval in the sub-scanning direction of the light receiving element array 120 can be further narrowed. That is, the influence of the speed variation in the sub-scanning direction can be further reduced, and at the same time, the cost of the light receiving lens 11 can be reduced. Hereinafter, a method of arranging the plurality of light receiving lenses 11 in one line will be described.

In FIGS. 12A to 12G, the plurality of light receiving lenses 11 have the same shape as viewed from a direction perpendicular to the main scanning direction. Specifically, the shapes of the light receiving lenses 11 as viewed from the Z direction perpendicular to the main scanning direction (X direction) and the sub-scanning direction (Y direction) are the same. The "same shape" includes a substantially same shape such as an inverted shape, and slight differences in shape are included in the "same shape".

In FIG. 12A, the shape of each light receiving lens 11 as viewed in the Z direction is a parallelogram shape. That is, both end surfaces in the main scanning direction of each light receiving lens 11 are inclined with respect to the sub-scanning direction. Inclination angles of the both end surfaces in the main scanning direction of the light receiving lens 11 are identical. When the plurality of light receiving lenses 11 are arranged side by side in the main scanning direction as in FIG. 12A, the end surfaces of the adjacent light receiving lenses 11 faces the both end surfaces of each light receiving lens 11, whereby the plurality of light receiving lenses 11 are arranged in a state where the end portions of the light receiving lenses 11 adjacent in the main scanning direction are coupled.

In FIG. 12B, rectangular cutouts are formed on both end surfaces in the main scanning direction of each light receiving lens 11 as viewed in the Z direction. When the plurality of light receiving lenses 11 are arranged side by side in the main scanning direction as in FIG. 12B, a part of the adjacent light receiving lenses 11 is fitted into the cutout formed in both end surfaces of each light receiving lens 11, whereby the plurality of light receiving lenses 11 are arranged in a state where the end portions of the light receiving lenses 11 adjacent in the main scanning direction are coupled.

In FIG. 12C, the shape of each light receiving lens 11 viewed in the Z direction is a trapezoidal shape. That is, both end surfaces in the main scanning direction of each light receiving lens 11 are inclined with respect to the sub-scanning direction. The shape of each light receiving lens 11 as viewed in the Z direction is an inverted shape with reference to the main scanning direction with respect to the shape as viewed in the Z direction of the light receiving lens 11 adjacent in the main scanning direction. When the plurality of light receiving lenses 11 are arranged side by side in the main scanning direction as in FIG. 12C, the end surfaces of the adjacent light receiving lenses 11 faces the both end surfaces of each light receiving lens 11, whereby the plurality of light receiving lenses 11 are arranged in a state where the end portions of the light receiving lenses 11 adjacent in the main scanning direction. Due to this, the plurality of light receiving lenses 11 are arranged in a state where the light receiving lenses 11 adjacent to each other are inverted and coupled.

In FIG. 12D, cutouts having a curved shape (semicircular or semi-elliptical) are formed on both end surfaces in the main scanning direction of each light receiving lens 11 as viewed in the Z direction. When the plurality of light receiving lenses 11 are arranged side by side in the main scanning direction as in FIG. 12D, a part of the adjacent light receiving lenses 11 is fitted into the cutout formed in both end surfaces of each light receiving lens 11, whereby the plurality of light receiving lenses 11 are arranged in a state where the end portions of the light receiving lenses 11 adjacent in the main scanning direction are coupled.

Next, the modifications of FIGS. 12E to 12G will be described. FIG. 12E is a modification of FIG. 12C, and can minimize the occurrence of missing pixels in the light receiving element array 120 described above. In FIG. 12E, the light receiving element arrays 120 are arranged on a longer side relative to the center portion in the width direction of the light receiving lenses 11 having a trapezoidal shape. The length in the main scanning direction of each light receiving element array 120 substantially coincides with the length in the main scanning direction of each light receiving lens 11 having a trapezoidal shape at the position where the light receiving element array 120 is arranged. By doing this, the light receiving element arrays 120 in a staggered arrangement in which the parts indicated by the broken line in FIG. 12E are adjacent to each other overlap in the main scanning direction, and as described later, a missing portion of the output signal does not occur unlike the light receiving element array 120 in a staggered arrangement illustrated in FIG. 12C.

The above is not limited to the light receiving lens 11 having a trapezoidal shape, and any shape may be adopted as long as the light receiving lenses 11 are coupled when inverted in the sub-scanning direction to form a light receiving lens array. Examples thereof are illustrated in FIGS. 12F and 12G. FIG. 12F illustrates a case where the plurality of light receiving lenses 11 having a rectangular cutout shape are inverted and coupled, and FIG. 12G illustrates a case where the plurality of light receiving lenses 11 having a circular cutout are inverted and coupled. Thus, in FIGS. 12E to 12G, the plurality of light receiving lenses 11 are arranged in a state where the light receiving lenses 11 adjacent to each other are inverted and coupled. In general, if the light receiving lens 11 is a line target in the sub-scanning direction, it can be inversely coupled. In FIGS. 12F and 12G, similarly to the inverted coupling of the trapezoidal shape of FIG. 12E, the broken line portion overlaps, and as described later, no signal missing portion occurs. Note that the light receiving lens 11 of FIG. 12G includes an edge portion 112 for securing rigidity and avoiding cracking.

As in FIGS. 12A to 12G, in the cross-sectional view in the optical axis direction of the light receiving lens 11, the lens end portion has a cross-sectional shape such as a parallelogram shape, a trapezoidal shape, a rectangular shape, or a cutout shape of a curved shape (circle, ellipse), a width in the sub-scanning direction satisfying the N.A. of the light receiving lens system, and is coupled to one line, thereby forming a lens array extending linearly in the main scanning direction. The center portion in the sub-scanning direction of the lens array is provided with the light receiving element array 120 of two rows in a staggered arrangement. Specifically, the plurality of light receiving element arrays 120 are arranged at the center portion in the main scanning direction of each of the plurality of light receiving lenses 11, and are alternately arranged in a staggered manner along the main scanning direction. This enables the light emitted from the inspection object to be delivered to the light receiving element arrays 120 in a staggered arrangement of two rows by the lens array of one row.

As illustrated in FIG. 12A, a shielding portion 111 is provided between the end portions of the light receiving lenses 11 adjacent in the main scanning direction. The shielding portion 111 is formed in a thin plate shape. The shielding portion 111 is extended toward the light receiving element (light receiving element array 120) from between the end portions of the light receiving lenses 11, and protrudes in the inspection object direction from the light receiving lens 11. The shielding portion 111 has a width equal to or greater than at least the width W1 in the sub-scanning direction of the light receiving lens 11. Although the shielding portion 111 is omitted in FIGS. 12B to 12G, the shielding portion 111 may be similarly provided between the end portions of the light receiving lenses 11. Note that in the examples of FIGS. 12F and 12G, the shielding portions 111 are thin crank-type and wave-type shielding plates, respectively. In short, at the coupling portion, light may be prevented from leaking out to the adjacent light receiving system.

As illustrated in FIGS. 12B to 12D, the plurality of light sources 103 that illuminate the inspection object may be provided in one-to-one correspondence with the plurality of light receiving element arrays 120. The plurality of light sources 103 may each have an elongated shape extending in a straight line along the main scanning direction, and in this case, as illustrated in FIGS. 12B to 12D, the plurality of light sources 103 may face each light receiving element array 120 in the Z direction. Due to this, the plurality of light sources 103 can be arranged in a staggered manner, and the line segment shaped light can be efficiently incident on each light receiving element array 120.

The plurality of light sources 103 have a light intensity distribution of a plurality of lines of illumination light in the sub-scanning direction corresponding to the plurality of light receiving element arrays 120. Although the light source 103 is omitted in FIGS. 12A and 12E to 12G, the plurality of light sources 103 may similarly be provided in one-to-one correspondence with the plurality of light receiving element arrays 120. However, without arranging the plurality of light sources 103 in a staggered manner, line illumination having a light intensity distribution including two intensity peaks in the sub-scanning direction may be used so that the light receiving element array 120 of each reading line L has a peak of the light intensity. Since the interval in the sub-scanning direction of the light receiving element array 120 in a staggered arrangement is narrow, line illumination having one peak may be used.

FIGS. 12H and 12I are schematic diagrams for explaining the position of an optical axis 113 in the light receiving system. Hereinafter, the position of the optical axis 113 in the light receiving system will be described with reference to FIGS. 12H and 12I with the configuration of FIG. 12E as an example, and the position of the optical axis 113 can be similarly set in other configurations such as FIGS. 12A to 12D, 12F, and 12G.

In FIG. 12H, the optical axis 113 of the light transmitted through the light receiving lenses 11 and guided to the light receiving element arrays 120 penetrates a position away in parallel with the sub-scanning direction (Y direction) from the substantially center portion of the light receiving element arrays 120. Specifically, the optical axis 113 of each light receiving lens 11 is substantially equidistant from the respective light receiving element arrays 120 arranged in a staggered manner, and penetrates positions having a length of substantially 1/2 in the main scanning direction of the respective light receiving element arrays 120 arranged in a staggered manner. In this example, the optical axes 113 are arranged side by side in one row along the main scanning direction (X direction), but the present invention is not limited to such a configuration.

In FIG. 12I, the optical axis 113 of the light transmitted through the light receiving lenses 11 and guided to the light receiving element arrays 120 penetrates the substantially center portion of the light receiving element arrays 120 arranged in a staggered manner. Therefore, the optical axes 113 are arranged in a staggered manner similarly to the light receiving element arrays 120 along the reading line L of two rows. Thus, aberration can be reduced by aligning the optical axis 113 of each light receiving lens 11 with each light receiving element array 120.

FIG. 13 illustrates the light intensity distribution on the light receiving surface of the light receiving element array 120 in a case where the light intensity distribution of the light source 103 in a case where the lens end portion is a parallelogram is flat. FIG. 13 illustrates an example of the light intensity distribution on the light receiving surface of each light receiving element array 120 in a case where the configuration of FIG. 12A is adopted. The lens array including the plurality of light receiving lenses 11 is a lens array including three light receiving lenses 11 for convenience of description.

The light intensity on each light receiving element array 120 of the entire lens array is illustrated in the left view of FIG. 13, and enlarged views are illustrated in the right two views. FIG. 14 illustrates details of the light intensity distribution in the vicinity of the coupling portion between the adjacent light receiving lenses 11. In the present embodiment, in two light receiving element arrays 120 adjacent arrange in a staggered manner, a signal missing pixel of one of the light receiving element arrays 120 is interpolated by a pixel of the other light receiving element array 120. FIG. 14 illustrates the method of interpolating the signal of the signal missing pixel by the mark of arrow.

Apart 121 surrounded by the broken line in FIG. 14 is a light receiving element positioned at the coupling portion between the adjacent light receiving lenses 11, and a signal missing portion occurs when light does not reach the light receiving element. Therefore, in the present embodiment, in the light receiving element arrays 120 adjacent arrange in a staggered manner, a signal of the signal missing portion is compensated by an output signal of the light receiving element (part 122 surrounded by the solid line) facing the light receiving element of the part 121 in the sub-scanning direction. Thus, a pixel interpolation portion is formed along the sub-scanning direction in the coupling portion between the adjacent light receiving lenses 11 (see FIG. 13). The signal missing portion may be corrected in advance by a reference medium for inspection. As the reference medium, a white chart for shading correction, a lattice pattern, or the like can be used.

The width in the sub-scanning direction of the light receiving lens 11 in FIG. 13 is 5 mm. Therefore, in a case where the light receiving lenses 11 are arranged in two rows in a staggered manner, the minimum interval of the light receiving element arrays 120 in a staggered arrangement needs to be 5 mm or more. However, as described above, when the lens array of one row is used, the interval is about 1/2 (slightly less than 3.0 mm). If shading correction is performed in consideration of the dynamic range and the like of the light receiving element array 120, the interval can be further narrowed. That is, the interval in the sub-scanning direction of the light receiving element array 120 in a staggered arrangement is narrowed, and at the same time, the number of the light receiving lenses 11 can be halved. Therefore, there is an advantage of being susceptible to an influence of variation in the conveyance speed in the sub-scanning direction, and at the same time, reduction in cost.

In the shielding portion 111 in FIG. 13, a shielding plate having a thickness t = 0.2 mm was disposed. When t = 0.2 mm, there is no problem in strength. The lens system is a both-side telecentric system. Of course, it goes without saying that an object-side telecentric system may be used.

As specific processing by the image processing method or the image processing system, an output signal of one row corresponding to the reading line is obtained by, regarding output signals from two of the light receiving elements separated in a sub-scanning direction at a same position of a main scanning direction, when an output signal from one of the light receiving elements (part 121 surrounded by the broken line) is lower than an output signal from the other light receiving element (part 122 surrounded by the solid line) and an output signal from one of the light receiving elements does not satisfy a threshold, interpolation is performed with the output signal from the other light receiving element. The interpolated output signal is synthesized with an output signal from the light receiving element at another position in the main scanning direction with respect to one light receiving element, thereby obtaining an output signal of one row corresponding to the reading line L.

Note that the light receiving elements of a part 123 surrounded by the two-dot chain line in FIG. 14 face each other in the sub-scanning direction, but both overlap each other by being shifted from the coupling portion between the adjacent light receiving lenses 11. In such an overlapping part, missing of the output signal from the light receiving element does not occur, and thus interpolation is not necessary.

In the example of FIG. 12E, the light intensity of the light receiving region is illustrated, and the reason why the signal missing portion does not occur is schematically illustrated in FIG. 15. FIG. 15 illustrates the light intensity distribution of the end portion of the light receiving element arrays 120 in a staggered arrangement as in FIG. 14. The light receiving elements of a part 124 surrounded by the two-dot chain line in FIG. 15 face each other in the sub-scanning direction, but both overlap each other by being shifted from the coupling portion between the adjacent light receiving lenses 11. As in FIG. 15, by arranging the light receiving element array 120 on the long side in the width direction of the light receiving lens 11 having a trapezoidal shape, it is possible to obtain a signal necessary for the reading line L of one row of the light receiving element arrays 120 in a staggered arrangement except for the signal missing portion in the light receiving unit.

As specific processing by the image processing method or the image processing system, an output signal of one row corresponding to the reading line is obtained by, regarding output signals from two of the light receiving elements (part 124 surrounded by the broken line) separated in a sub-scanning direction at a same position of a main scanning direction, selecting one of output signals of a part where an output signal of one of the light receiving elements overlaps with an output signal of an other of the light receiving elements, and performing correction by a ratio of one signal and an other output signal of output signals corrected in advance by a reference medium to combine one signal and an other signal.

## DESCRIPTION OF REFERENCE SIGNS

| | |
|---|---|
| 10 | light source unit |
| 11 | light receiving lens |
| 12 | light receiving unit |
| 20 | focal plane |
| 103 | light source |
| 104 | condenser lens |
| 105 | cylindrical lens |
| 110 | lens holder |
| 111 | shielding portion |
| 120 | light receiving element array |
| 131 | red LD |
| 132 | green LD |
| 133 | blue LD |
| 134 | light source substrate |
| 135 | heatsink |

## Claims

**1.** An optical line sensor that reads, in a reading line extending in a main scanning direction, an inspection object conveyed in a sub-scanning direction, the optical line sensor comprising:

a plurality of light receiving lenses arranged along the main scanning direction; and
a plurality of light receiving elements arranged in a line along the main scanning direction and configured to receive light transmitted through the plurality of light receiving lenses,
wherein the plurality of light receiving elements form at least two rows of the reading lines, and
the light receiving lenses constitute a telecentric optical system, and a width in the sub-scanning direction is smaller than a width in the main scanning direction.

**2.** The optical line sensor according to claim 1, wherein the light receiving lens is formed in a rectangular shape as viewed from a direction orthogonal to the main scanning direction and the sub-scanning direction.

**3.** The optical line sensor according to claim 1, wherein the plurality of light receiving lenses are arranged separately from each other by a width equal to or less than a width in the main scanning direction of the light receiving lenses.

**4.** The optical licenser according to claim 1, wherein the width in the sub-scanning direction of the light receiving lens is set such that N.A. of the light receiving lens satisfies $0.001 < N.A. < 0.05$.

**5.** The optical line sensor according to claim 1, wherein

the plurality of light receiving elements constitute a plurality of light receiving element arrays by being arranged in an array of two or more rows, and
the plurality of light receiving lenses as many as a number corresponding to the plurality of light receiving element arrays are arranged, and an optical axis of light transmitted through each light receiving lens and guided to each light receiving element array penetrates a substantially center portion of each light receiving element array.

**6.** The optical line sensor according to claim 1, wherein

the plurality of light receiving elements constitute a plurality of light receiving element arrays by being arranged in an array of two or more rows, and
the plurality of light receiving lenses as many as a number corresponding to the plurality of light receiving element arrays are arranged, and an optical axis of light transmitted through each light receiving lens and guided to each light receiving element array penetrates a position away in parallel with the sub-scanning direction from a substantially center portion of each light receiving element array.

**7.** The optical line sensor according to claim 5 or 6, wherein the plurality of light receiving element arrays are light receiving element arrays shorter than a plurality of reading lines arranged in each of the two rows of the reading lines, and the light receiving element array arranged in one reading line and the light receiving element array arranged in an other reading line are alternately arranged in a staggered manner along the main scanning direction.

**8.** The optical line sensor according to claim 1, wherein each of the plurality of light receiving lenses includes a gradient index lens that forms an inverted image, an achromat, or an apochromat.

**9.** The optical line sensor according to claim 8, wherein the gradient index lens is made of glass or resin, and in lens parameters of the lens, an on-axis refractive index N0 is $1.45 \leq N0 \leq 1.65$, a refractive index distribution constant $\sqrt{A}$ is $0.05 \leq \sqrt{A} \leq 0.12$, and a focal length f is $50\ mm \leq f \leq 150\ mm$.

**10.** The optical line sensor according to claim 8, wherein each of the plurality of light receiving lenses includes an achromate or an apochromat in which a plurality of lenses are combined, the plurality of lenses are a lens system in which only convex lenses are combined or a lens system in which a convex lens and a concave lens are combined, a focal length f of the plurality of lenses is $25\ mm \leq f \leq 250\ mm$, and an aperture $\Phi$ of the plurality of lenses is $2\ mm \leq \Phi \leq 50\ mm$.

**11.** The optical line sensor according to claim 1, further comprising a plurality of light sources that irradiate an inspection object with light,
wherein the plurality of light sources are arranged side by side in parallel to the reading line, an optical axis of the plurality of light sources connects an intersection with an optical axis of light transmitted through the plurality of light receiving lenses and guided to the plurality of light receiving elements and is arranged side by side at an arbitrary position on an imaginary plane intersecting with the optical axis of light transmitted through the plurality of light receiving lenses and guided to the plurality of light receiving elements, and the light sources are arranged side by side at a substantially center portion between the light receiving lenses adjacent to each other.

**12.** The optical line sensor according to claim 11, wherein the plurality of light sources include light sources having a plurality of different wavelengths, and a plurality of light sources of one unit are arranged in the main scanning direction with the light sources having the plurality of different wavelengths as one unit.

**13.** The optical line sensor according to claim 11, further comprising a condenser lens condensing light fluxes from the plurality of light sources.

**14.** The optical line sensor according to claim 13, wherein the condenser lens includes a first condenser lens in which power in the main scanning direction is greater than power in the sub-scanning direction, and a second condenser lens in which power in the sub-scanning direction is greater than power in the main scanning direction.

**15.** The optical line sensor according to claim 13, wherein the condenser lens is a single lens body, and power in the main scanning direction of the lens body is greater than power in the sub-scanning direction.

**16.** The optical line sensor according to claim 14, wherein power in the main scanning direction of the condenser lens is adjustable by the first condenser lens and the second condenser lens.

**17.** The optical line sensor according to claim 13, wherein the condenser lens is a cylindrical lens or a Fresnel lens.

**18.** The optical line sensor according to claim 14, wherein

the first condenser lens is a lenticular lens or a prism array, and
the second condenser lens is a Fresnel lens or a cylindrical lens.

**19.** The optical line sensor according to claim 11, wherein the plurality of light sources include a white LED.

**20.** The optical line sensor according to claim 11, wherein the plurality of light sources include a red LED, a green LED, and a blue LED.

**21.** The optical line sensor according to claim 11, wherein the plurality of light sources include a laser diode.

**22.** The optical line sensor according to claim 11, further comprising:

a light source substrate mounted with the plurality of light sources; and
a heatsink attached to the light source substrate.

**23.** The optical line sensor according to claim 1, wherein

the plurality of light receiving lenses are arranged in one row along the main scanning direction, and
the plurality of light receiving lenses are arranged in a state where end portions of the light receiving lenses adjacent to each other in the main scanning direction are coupled to each other.

**24.** The optical line sensor according to claim 23, wherein the plurality of light receiving lenses have a same shape as viewed from a direction perpendicular to the main scanning direction.

**25.** The optical line sensor according to claim 24, wherein the plurality of light receiving lenses are arranged in a state where the light receiving lenses adjacent to each other are inverted and coupled.

**26.** The optical line sensor according to claim 23 or 24, wherein

the plurality of light receiving elements constitute a plurality of light receiving element arrays by being arranged in an array of two or more rows, and
the plurality of light receiving element arrays are arranged at center portions in the main scanning direction of the plurality of light receiving lenses, respectively, and are alternately arranged in a staggered manner along the main scanning direction.

27. The optical line sensor according to claim 26, wherein optical axes of the plurality of light receiving lenses are substantially equidistant from the light receiving element arrays arranged in a staggered manner, and penetrate a position at a length of substantially 1/2 in the main scanning direction of the light receiving element arrays arranged in the staggered manner.

28. The optical line sensor according to claim 26, wherein optical axes of the plurality of light receiving lenses penetrate a substantially center portion of the light receiving element arrays arranged in the staggered manner.

29. The optical line sensor according to claim 23 or 24, wherein

the plurality of light receiving elements constitute a plurality of light receiving element arrays by being arranged in an array of two or more rows, and
the optical line sensor further includes a plurality of light sources that illuminate an inspection object and have a one-to-one correspondence with the plurality of light receiving element arrays.

30. The optical line sensor according to claim 29, wherein the plurality of light sources have a light intensity distribution of a plurality of lines of illumination light in the sub-scanning direction corresponding to the plurality of light receiving element arrays.

31. The optical line sensor according to claim 23 or 24, further comprising a shielding portion that extends from between end portions of the light receiving lenses adjacent to each other in the main scanning direction toward the plurality of light receiving elements and has a width equal to or greater than at least a width in the sub-scanning direction of the light receiving lens.

32. The optical line sensor according to claim 31, wherein the shielding portion protrudes from the light receiving lens toward an inspection object direction.

33. An image processing method using the optical line sensor according to claim 26, wherein an output signal of one row corresponding to the reading line is obtained by, regarding output signals from two of the light receiving elements separated in a sub-scanning direction at a same position of a main scanning direction, selecting one of output signals of a part where an output signal of one of the light receiving elements overlaps with an output signal of an other of the light receiving elements, and performing correction by a ratio of one signal and an other output signal of output signals corrected in advance by a reference medium to combine one signal and an other signal.

34. An image processing method using the optical line sensor according to claim 26, wherein an output signal of one row corresponding to the reading line is obtained by, regarding output signals from two of the light receiving elements separated in a sub-scanning direction at a same position of a main scanning direction, when an output signal from one of the light receiving elements is lower than an output signal from an other of the light receiving elements and an output signal from one of the light receiving elements does not satisfy a threshold, performing interpolation with an output signal from an other of the light receiving elements, and combining the interpolated output signal with an output signal from the light receiving element at another position in the main scanning direction with respect to the one light receiving element.

35. An image processing system using the optical line sensor according to claim 26, wherein an output signal of one row corresponding to the reading line is obtained by, regarding output signals from two of the light receiving elements separated in a sub-scanning direction at a same position of a main scanning direction, selecting one of output signals of a part where an output signal of one of the light receiving elements overlaps with an output signal of an other of the light receiving elements, and performing correction by a ratio of one signal and an other output signal of output signals corrected in advance by a reference medium to combine one signal and an other signal.

36. An image processing system using the optical line sensor according to claim 26, wherein an output signal of one row corresponding to the reading line is obtained by, regarding output signals from two of the light receiving elements separated in a sub-scanning direction at a same position of a main scanning direction, when an output signal from one of the light receiving elements is lower than an output signal from an other of the light receiving elements and an output signal from one of the light receiving elements does not satisfy a threshold, performing interpolation with an output signal from an other of the light receiving elements, and combining the interpolated output signal with an output signal from the light receiving element at another position in the main scanning direction with respect to the one light receiving element.

FIG. 1

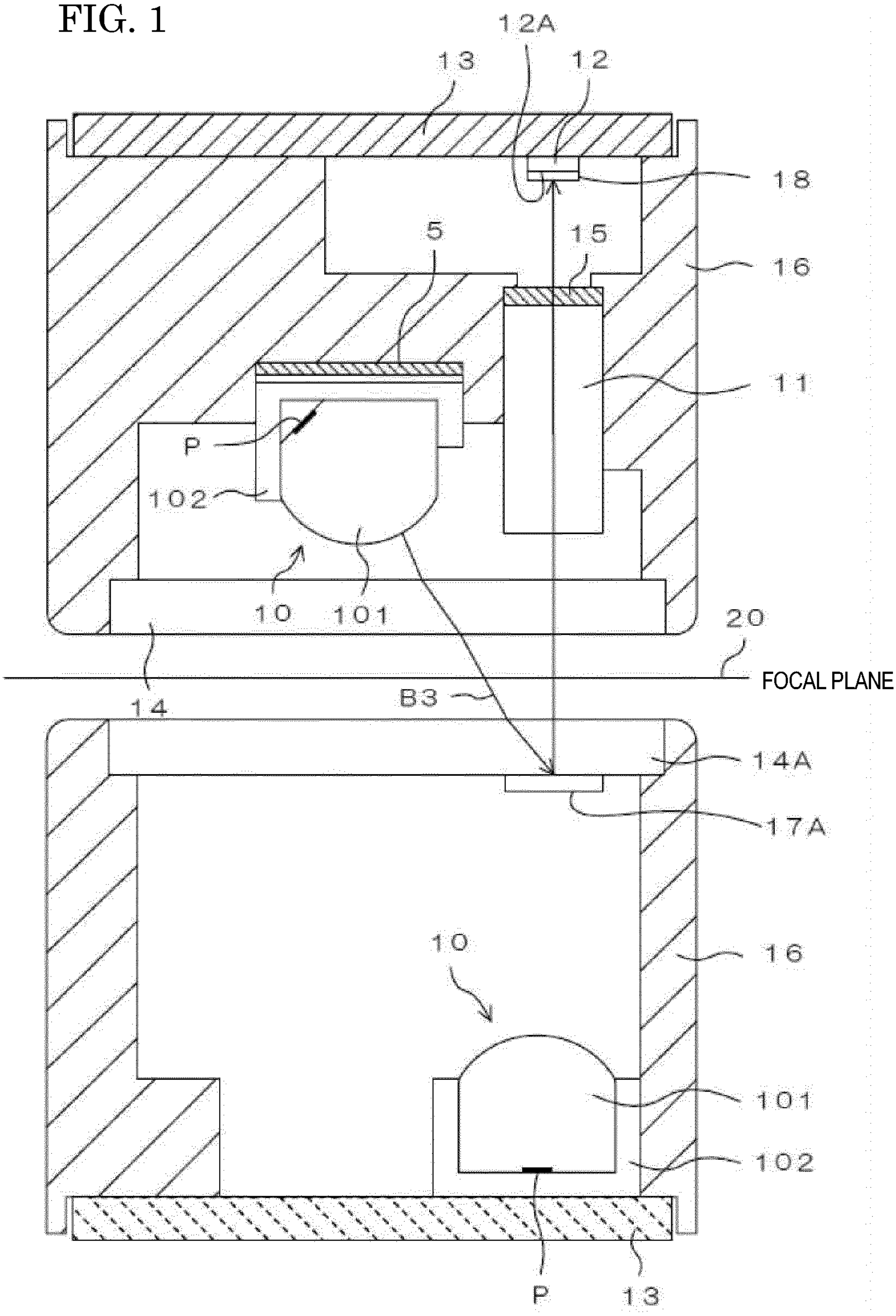
12A
13
12
18
5
15
16
11
P
102
10
101
20
FOCAL PLANE
14
B3
14A
17A
10
16
101
102
P
13

FIG. 2

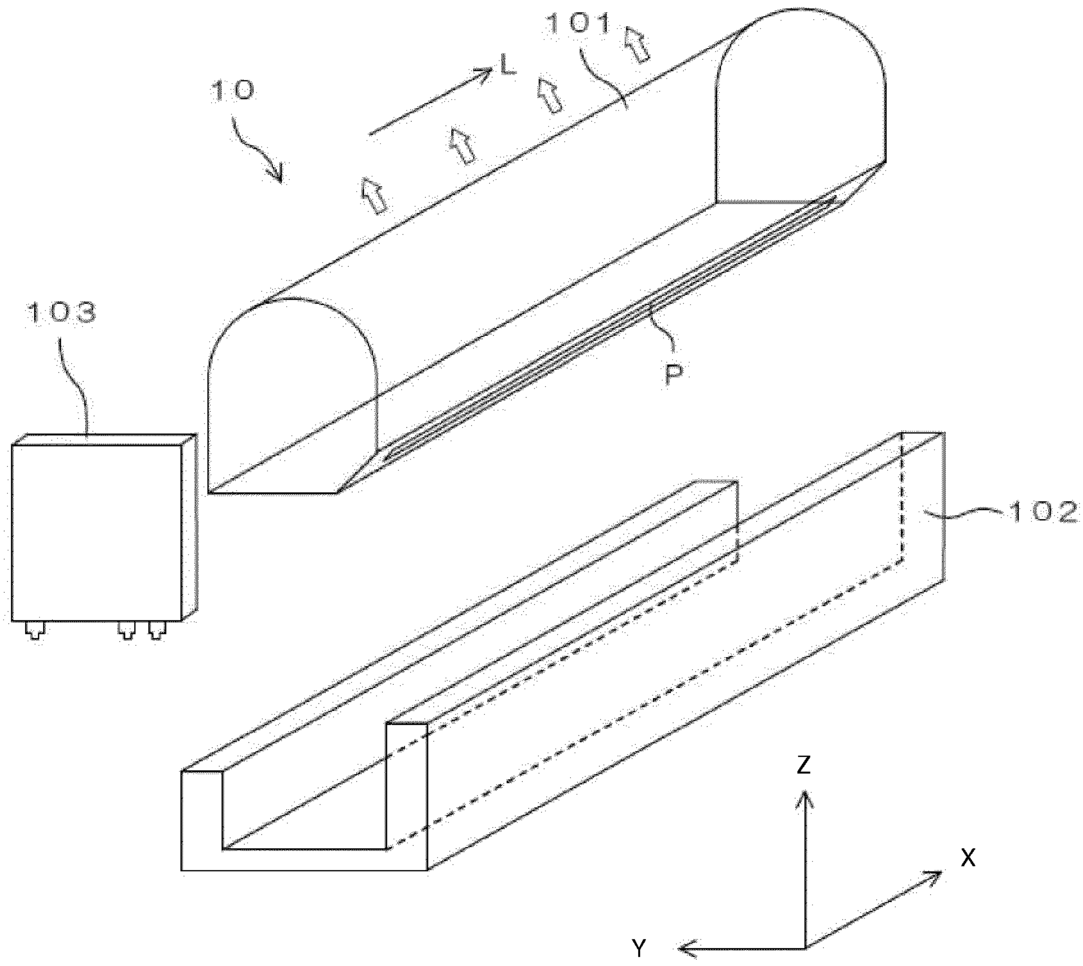

FIG. 3

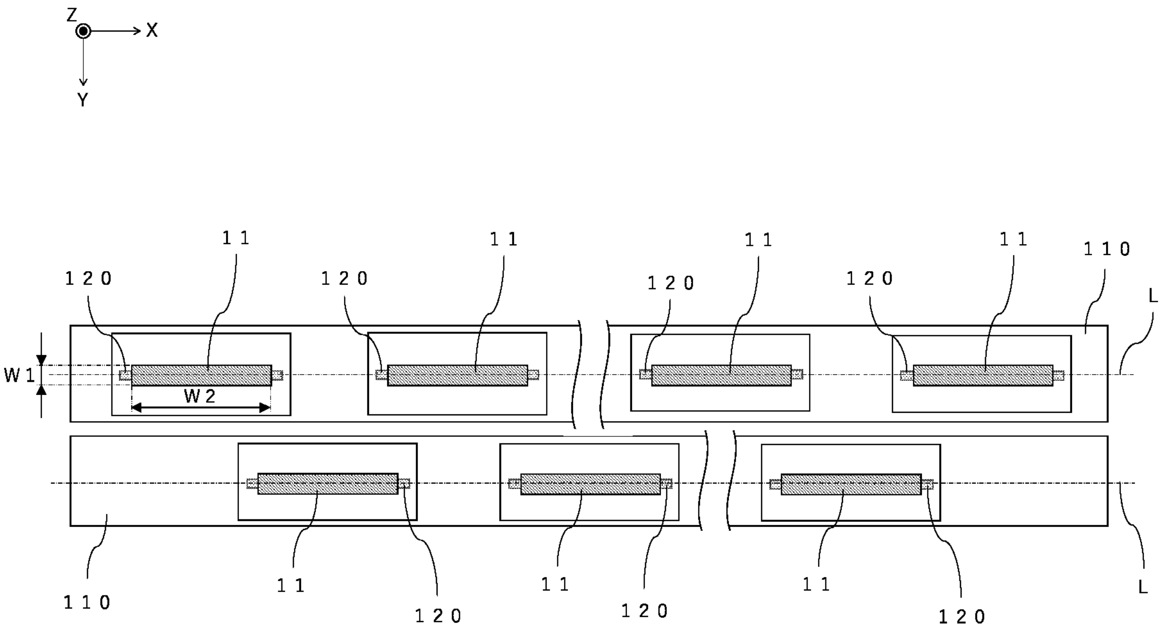
Z
X
Y
11
11
11
11
110
120
120
120
120
L
W1
W2
110
11
11
11
120
120
120
L

FIG. 4

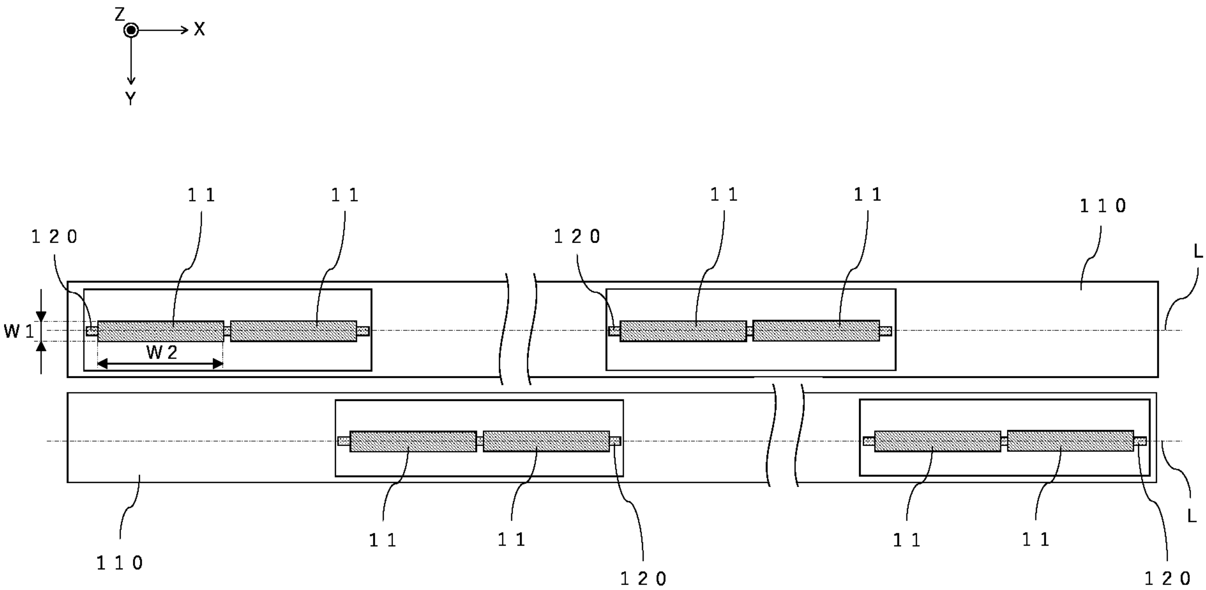

FIG. 5

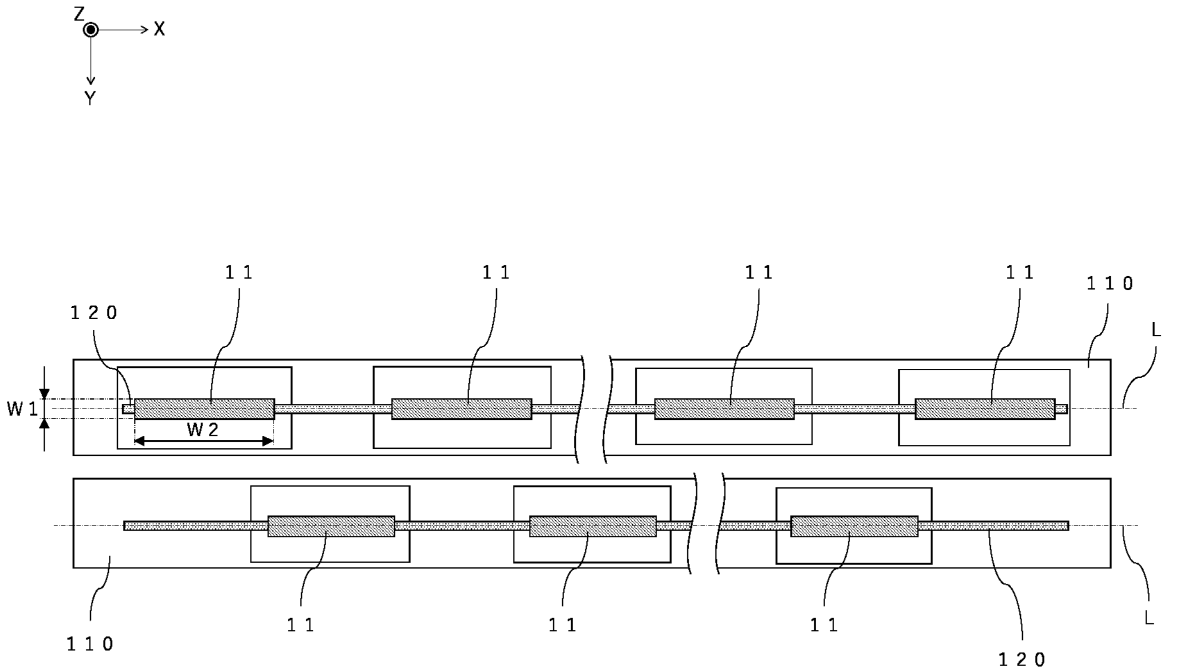

FIG. 6

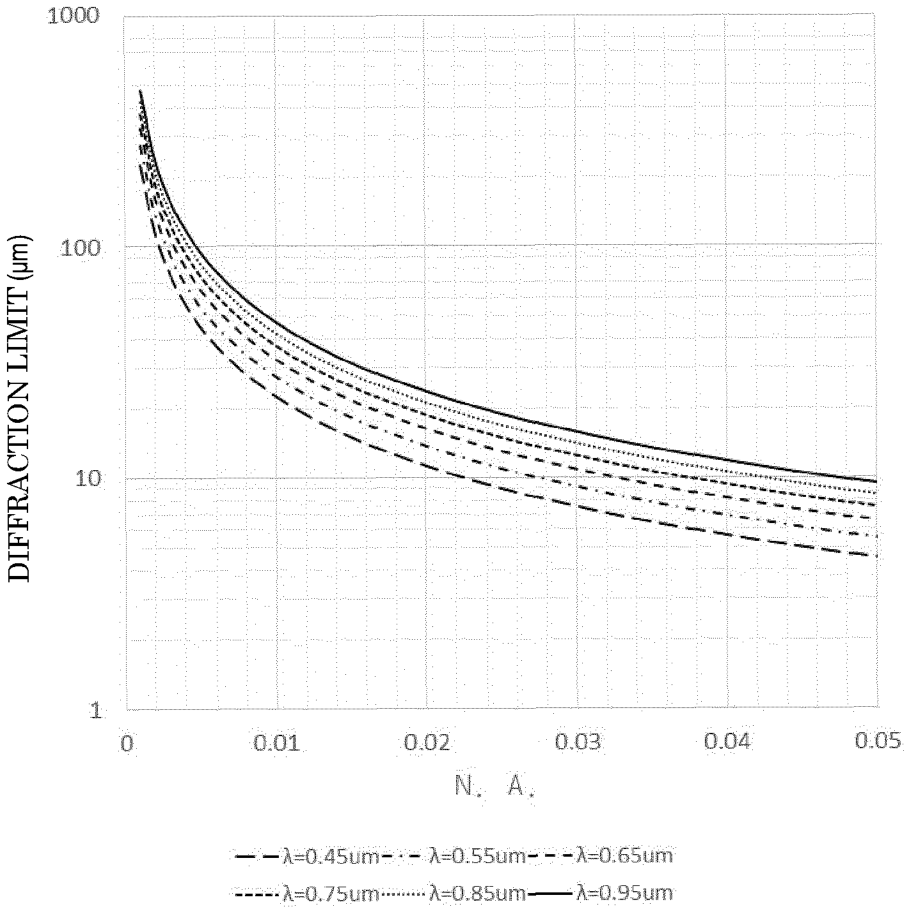
1000
100
10
1
DIFFRACTION LIMIT (μm)
0
0.01
0.02
0.03
0.04
0.05
N. A.
λ=0.45um
λ=0.55um
λ=0.65um
λ=0.75um
λ=0.85um
λ=0.95um

FIG. 7A

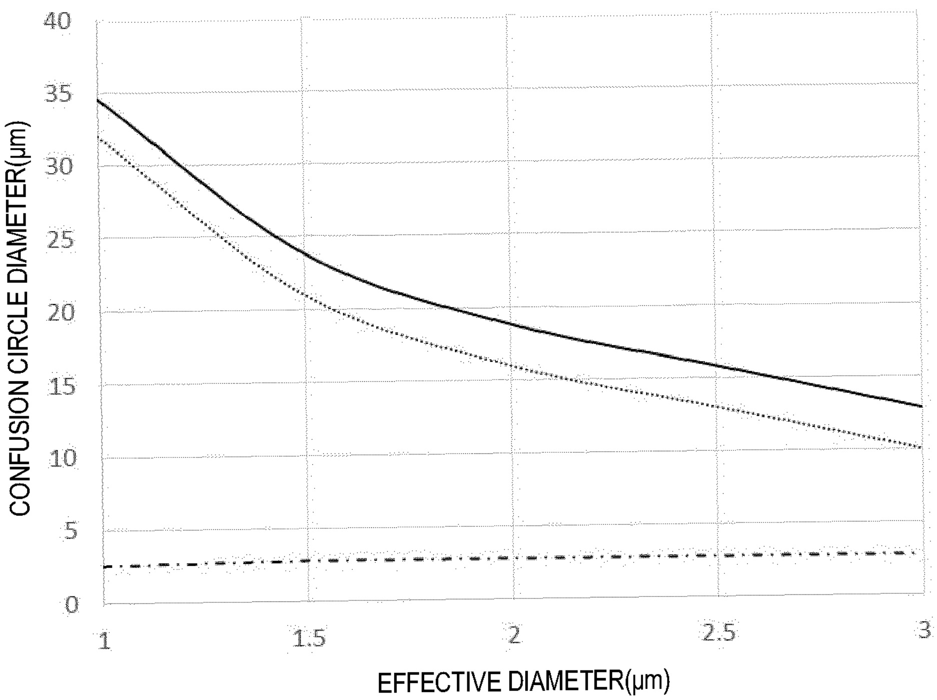
40
35
30
25
20
15
10
5
0
CONFUSION CIRCLE DIAMETER(μm)
1
1.5
2
2.5
3
EFFECTIVE DIAMETER(μm)

FIG. 7B

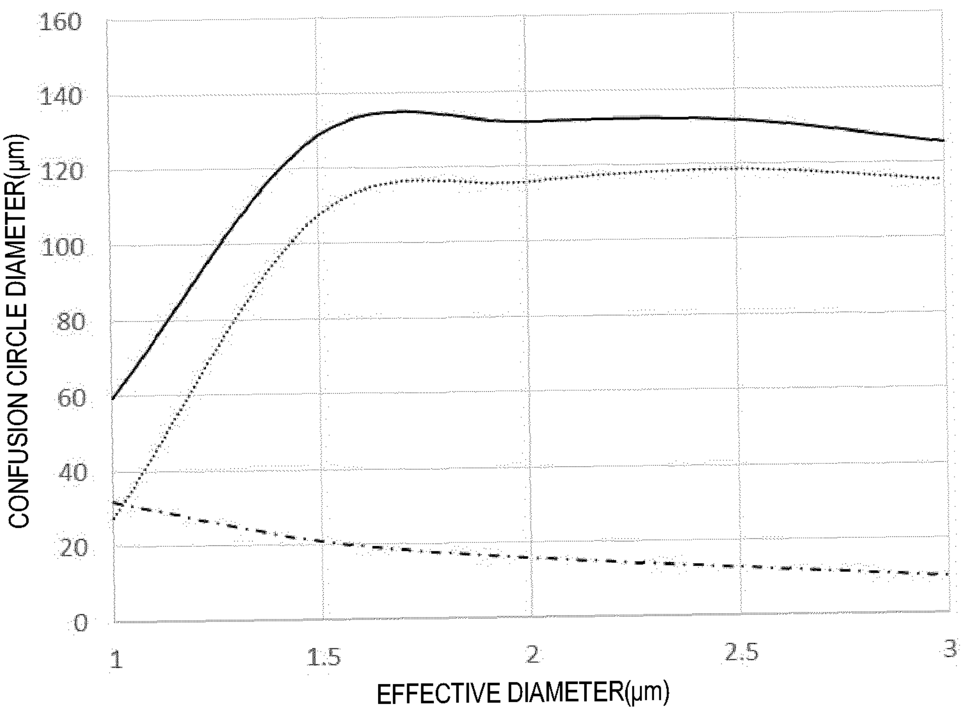
CONFUSION CIRCLE DIAMETER(μm)
160
140
120
100
80
60
40
20
0
1
1.5
2
2.5
3
EFFECTIVE DIAMETER(μm)

FIG. 7C

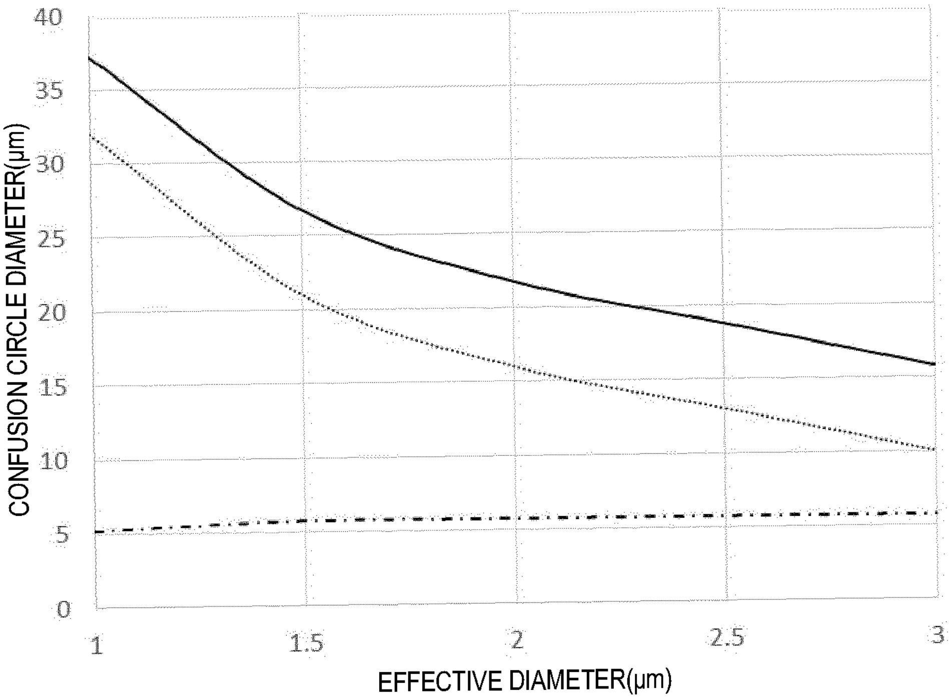
40
35
30
25
20
15
10
5
0
CONFUSION CIRCLE DIAMETER(μm)
1
1.5
2
2.5
3
EFFECTIVE DIAMETER(μm)

FIG. 8A

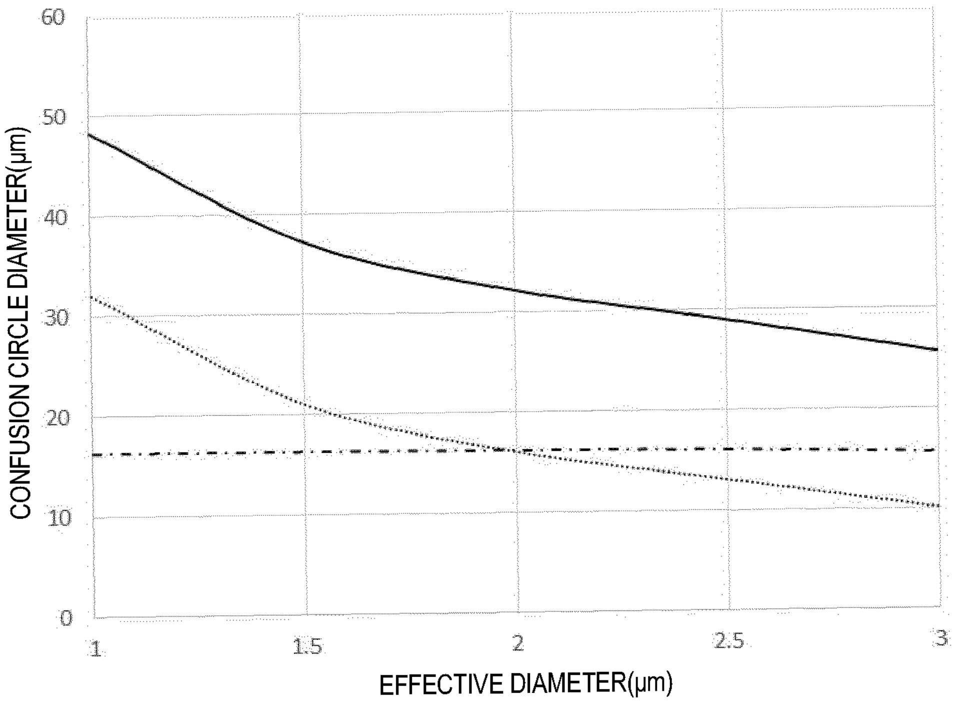
60
50
40
30
20
10
0
CONFUSION CIRCLE DIAMETER(μm)
1
1.5
2
2.5
3
EFFECTIVE DIAMETER(μm)

FIG. 8B

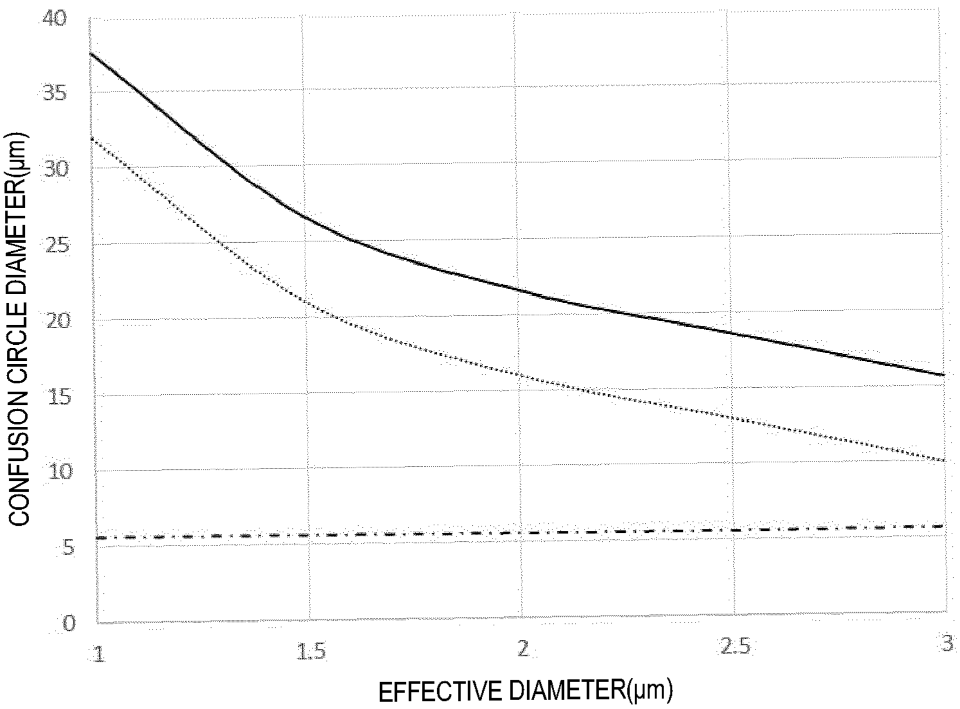
40
35
30
25
20
15
10
5
0
CONFUSION CIRCLE DIAMETER(µm)
1
1.5
2
2.5
3
EFFECTIVE DIAMETER(µm)

FIG. 8C

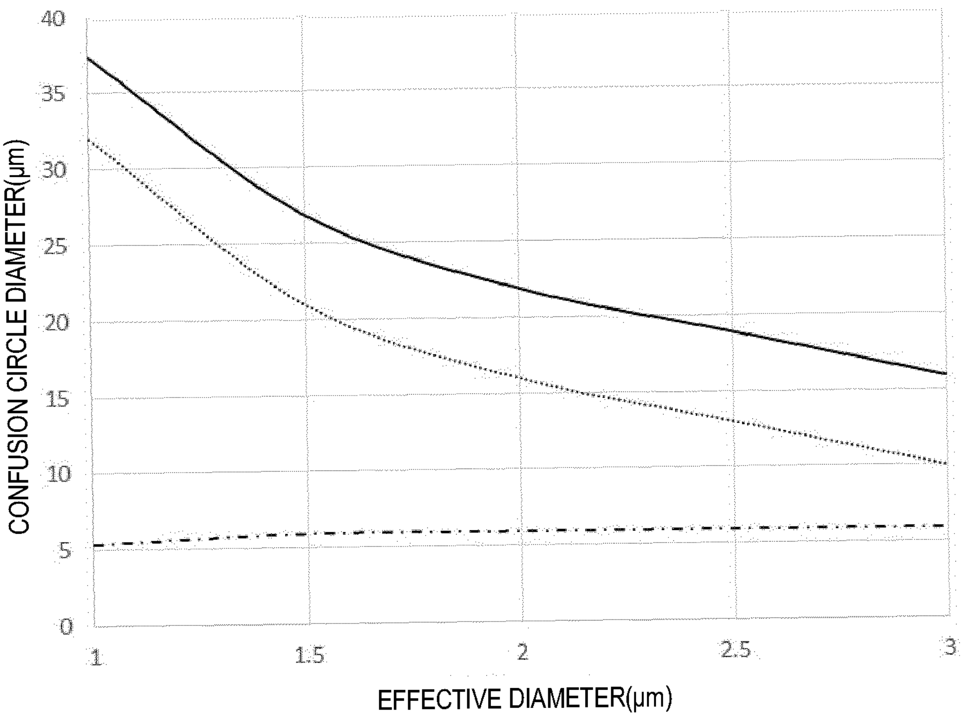

40
35
30
25
20
15
10
5
0
CONFUSION CIRCLE DIAMETER(μm)
1
1.5
2
2.5
3
EFFECTIVE DIAMETER(μm)

FIG. 8D

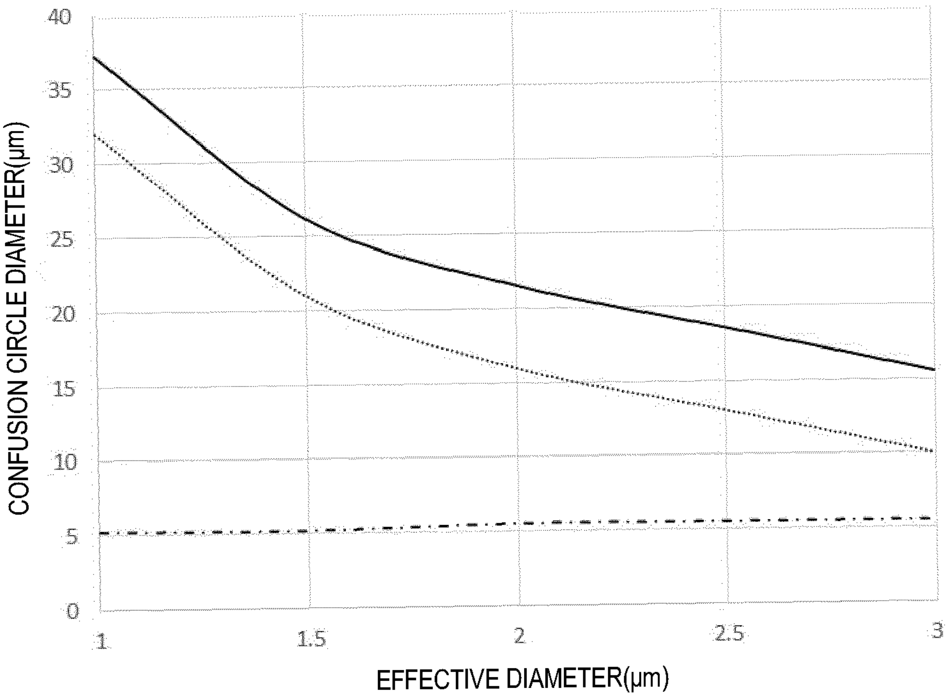
CONFUSION CIRCLE DIAMETER(μm)
40
35
30
25
20
15
10
5
0
1
1.5
2
2.5
3
EFFECTIVE DIAMETER(μm)

FIG. 9A

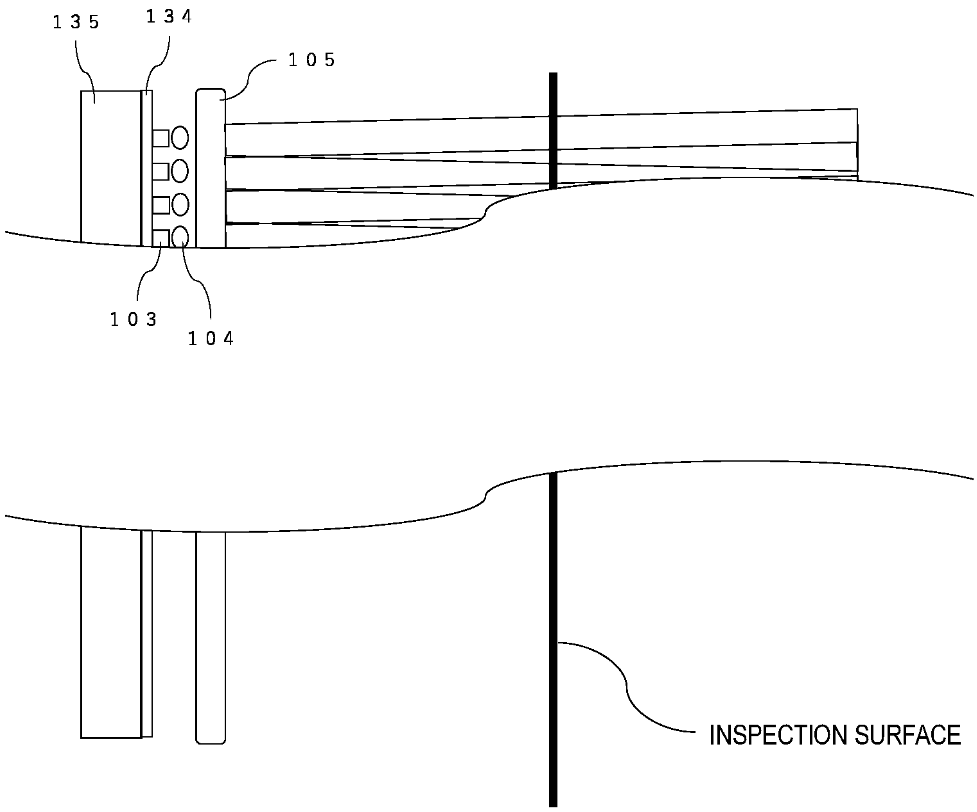

FIG. 9B

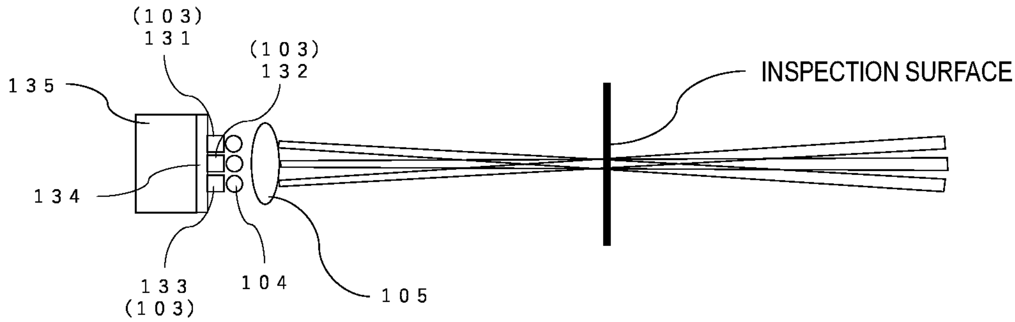

FIG. 10A

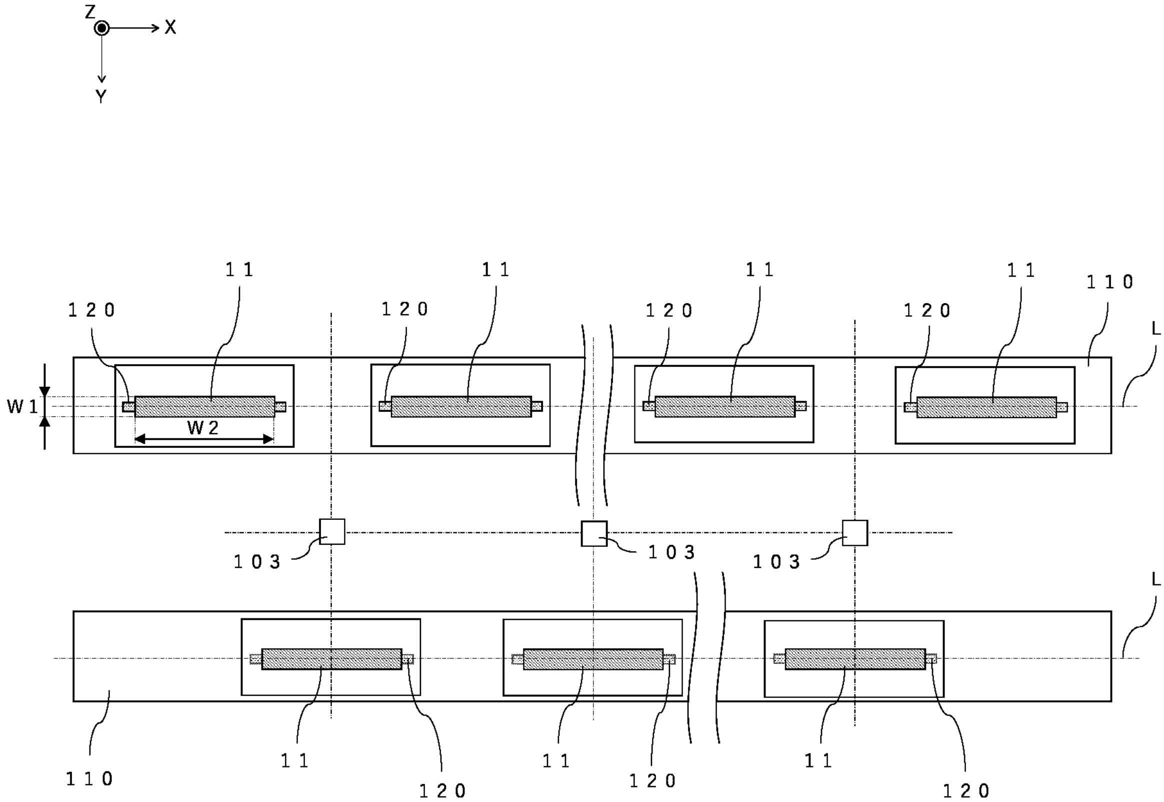
Z
X
Y
11
11
11
11
110
120
120
120
120
L
W1
W2
103
103
103
L
110
11
11
11
120
120
120

FIG. 10B

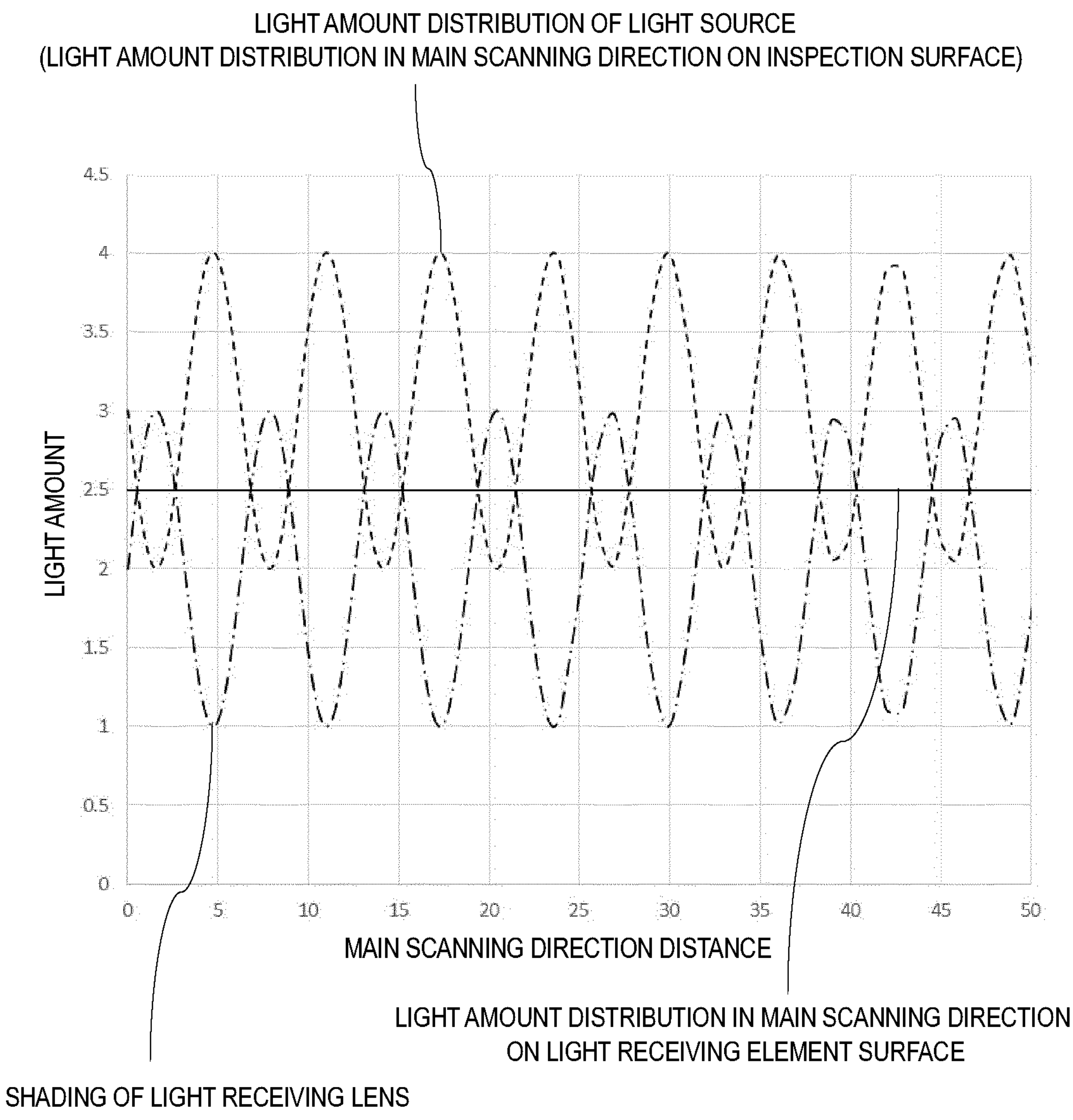
LIGHT AMOUNT DISTRIBUTION OF LIGHT SOURCE
(LIGHT AMOUNT DISTRIBUTION IN MAIN SCANNING DIRECTION ON INSPECTION SURFACE)
LIGHT AMOUNT
4.5
4
3.5
3
2.5
2
1.5
1
0.5
0
0
5
10
15
20
25
30
35
40
45
50
MAIN SCANNING DIRECTION DISTANCE
LIGHT AMOUNT DISTRIBUTION IN MAIN SCANNING DIRECTION
ON LIGHT RECEIVING ELEMENT SURFACE
SHADING OF LIGHT RECEIVING LENS

FIG. 10C

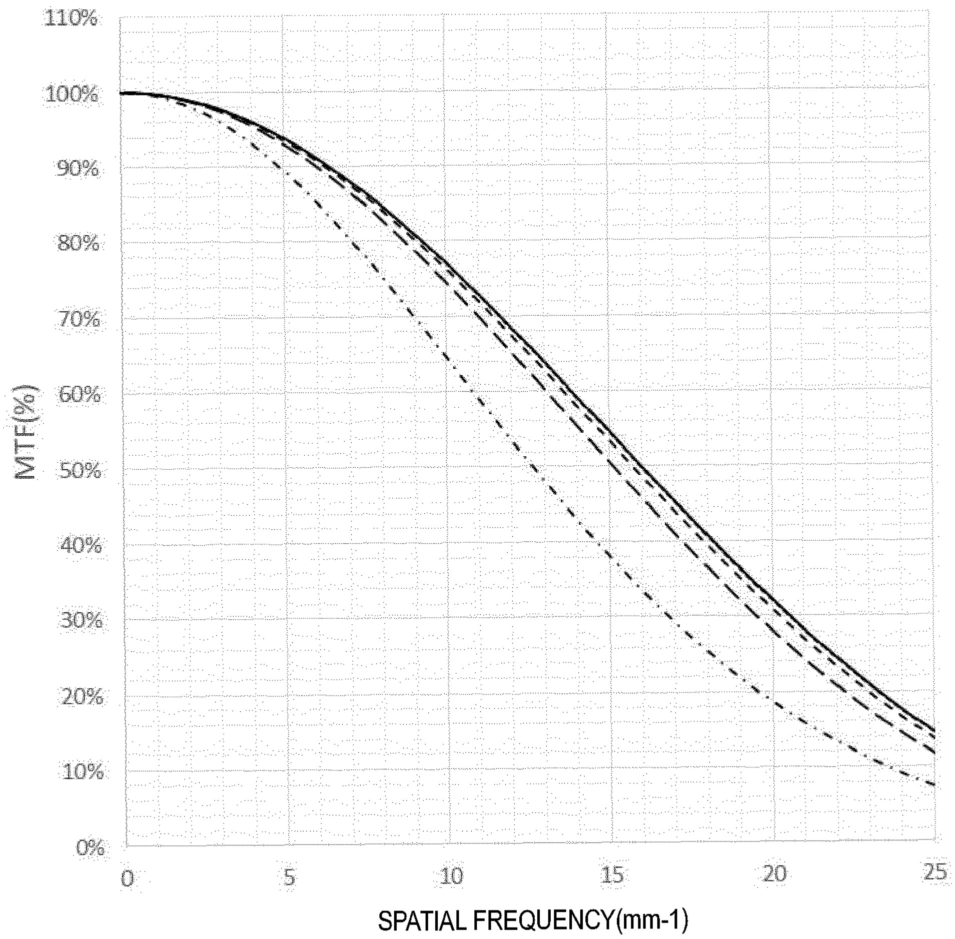
110%
100%
90%
80%
70%
60%
50%
40%
30%
20%
10%
0%
MTF(%)
0
5
10
15
20
25
SPATIAL FREQUENCY(mm-1)

FIG. 10D

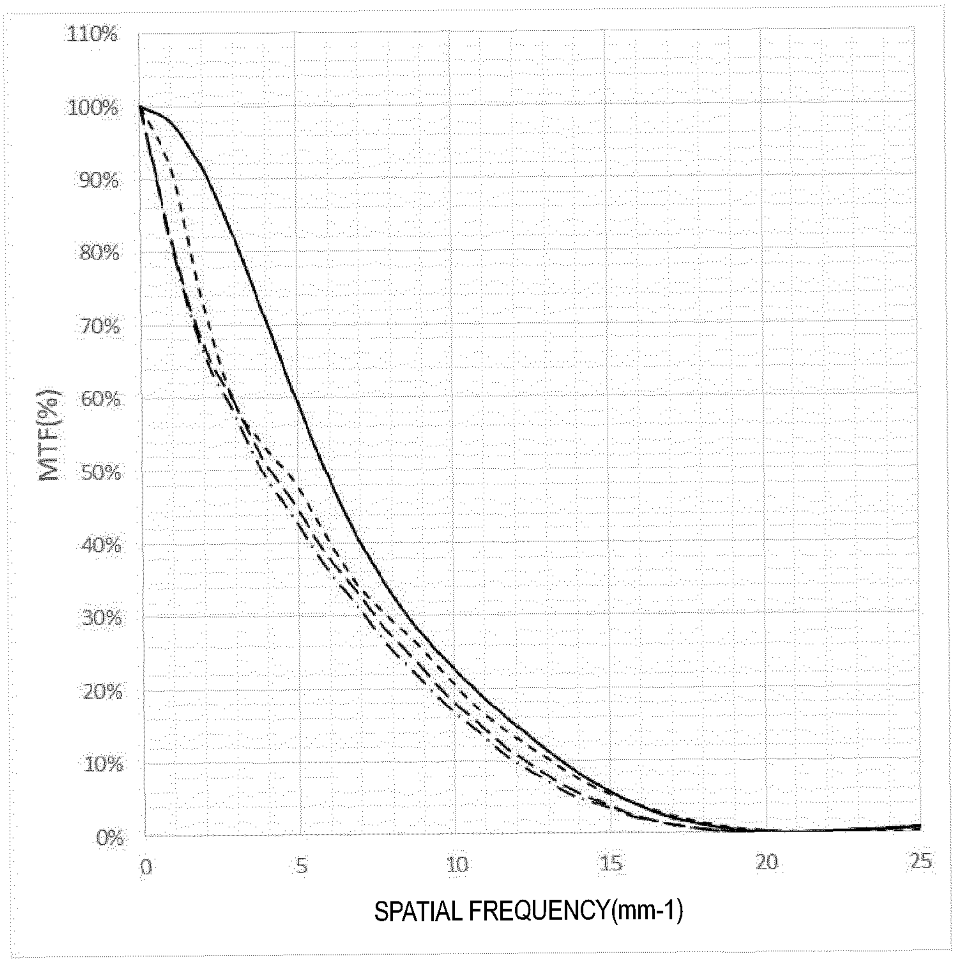
110%
100%
90%
80%
70%
60%
50%
40%
30%
20%
10%
0%
MTF(%)
0
5
10
15
20
25
SPATIAL FREQUENCY(mm-1)

FIG. 10E

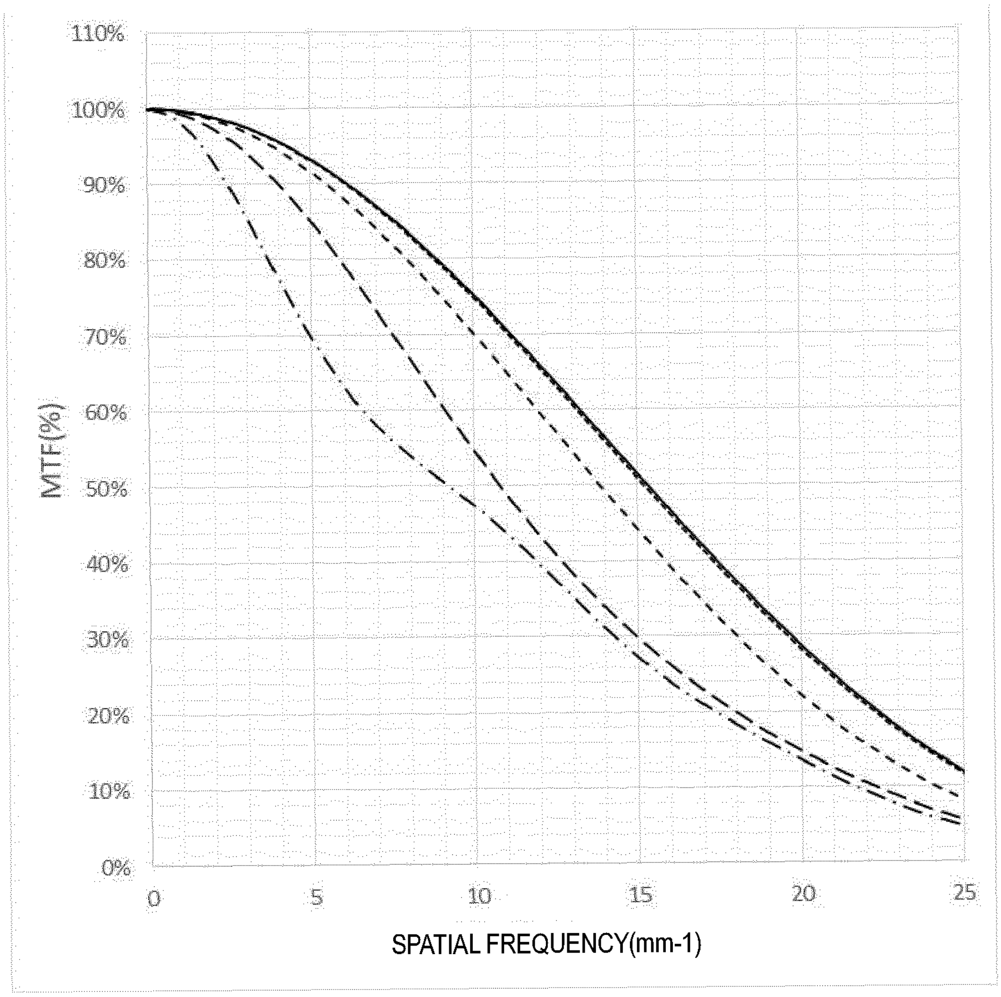
110%
100%
90%
80%
70%
60%
50%
40%
30%
20%
10%
0%
MTF(%)
0
5
10
15
20
25
SPATIAL FREQUENCY(mm-1)

FIG. 11

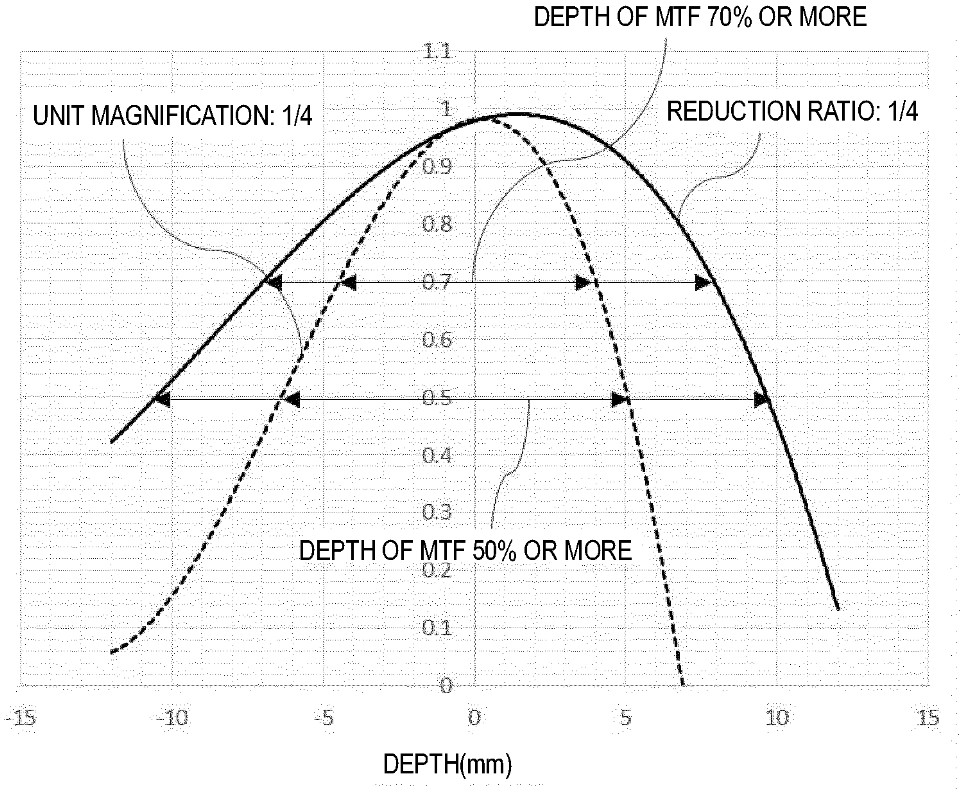
DEPTH OF MTF 70% OR MORE
UNIT MAGNIFICATION: 1/4
REDUCTION RATIO: 1/4
DEPTH OF MTF 50% OR MORE
1.1
1
0.9
0.8
0.7
0.6
0.5
0.4
0.3
0.2
0.1
0
-15
-10
-5
0
5
10
15
DEPTH(mm)

FIG. 12A

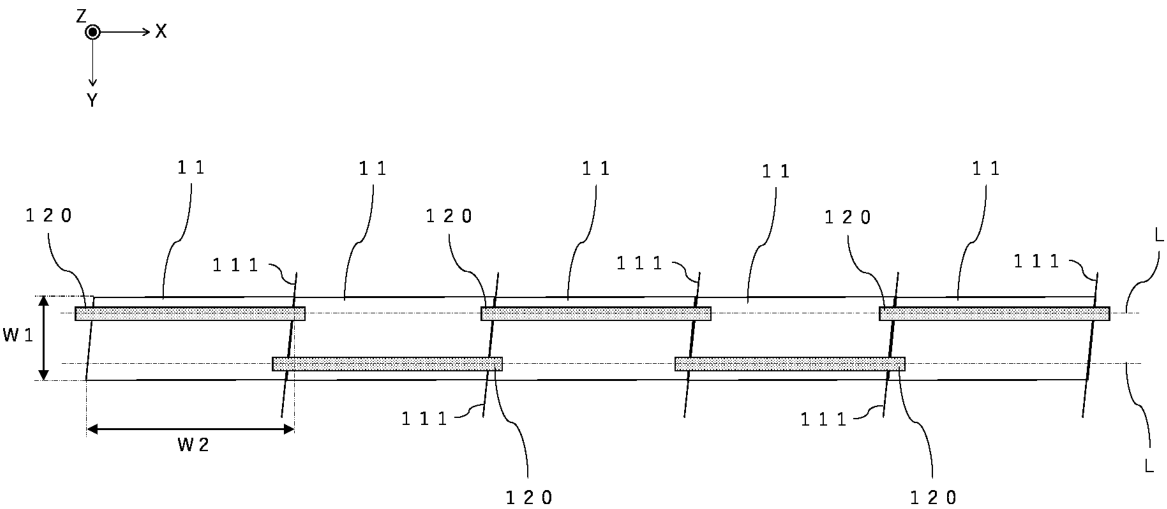

FIG. 12B

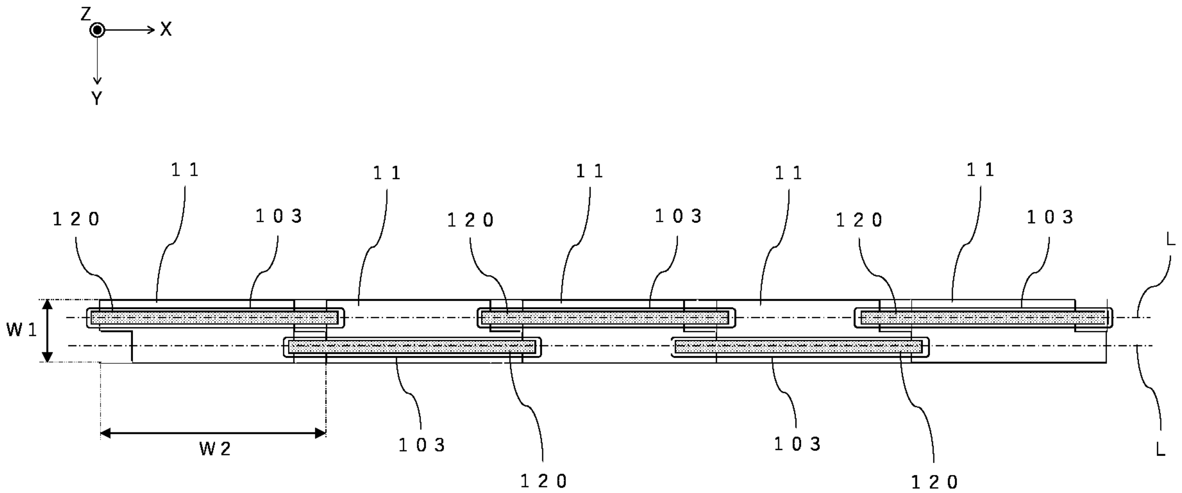

FIG. 12C

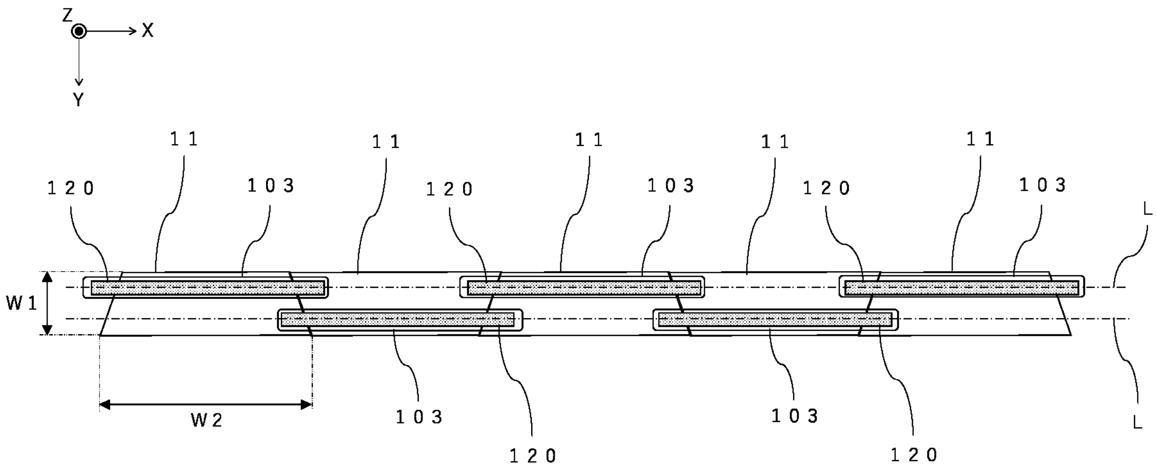

FIG. 12D

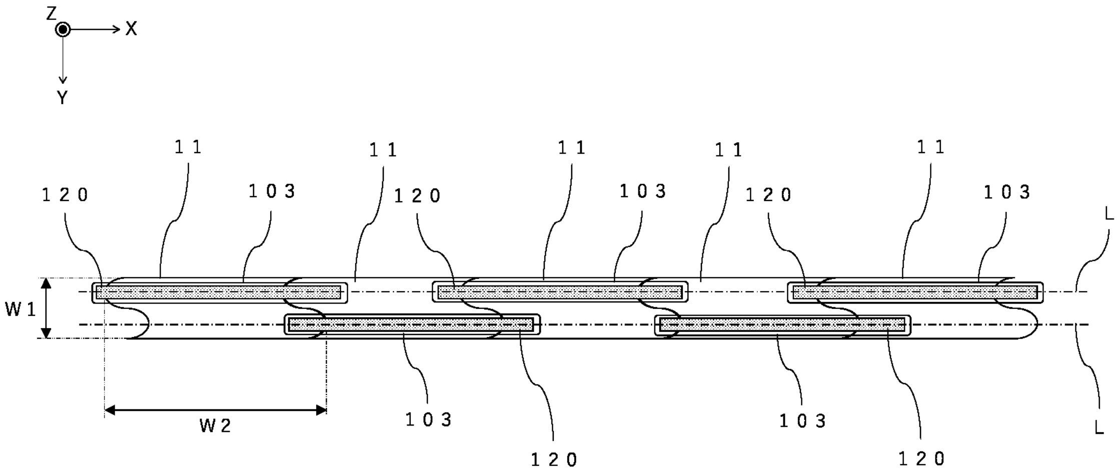

FIG. 12E

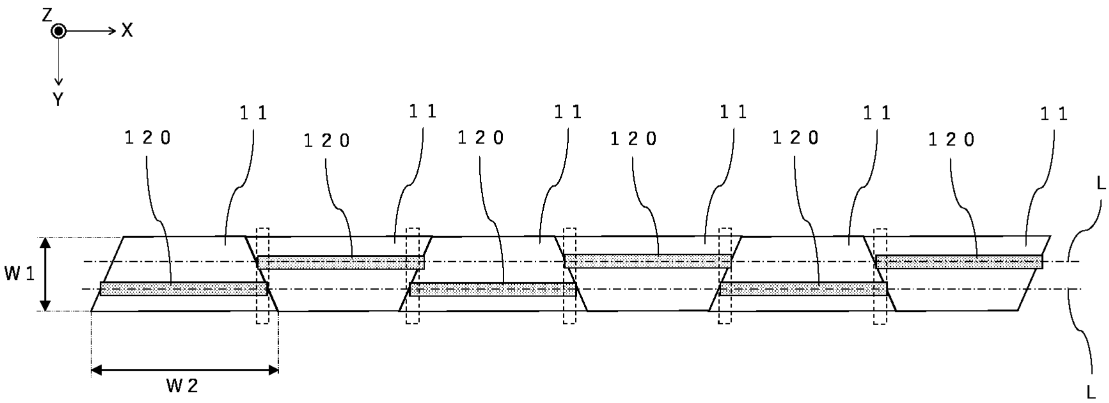

FIG. 12F

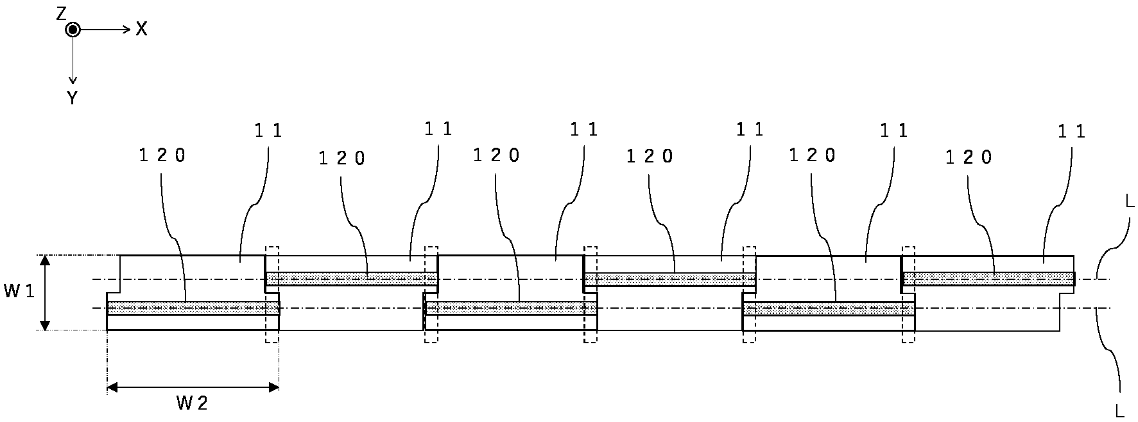

FIG. 12G

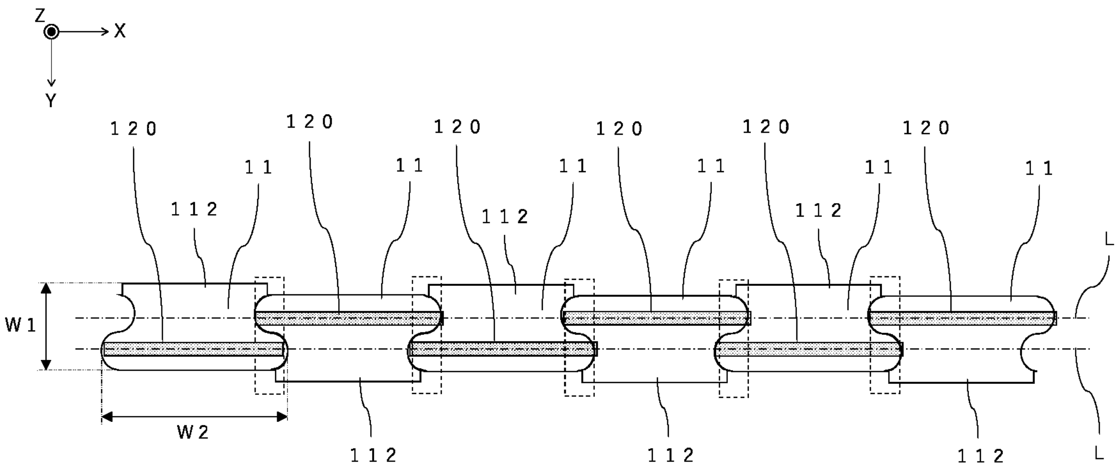
Z
X
Y
120
120
120
120
120
120
11
11
11
11
11
11
112
112
112
L
W1
W2
112
112
112
L

FIG. 12H

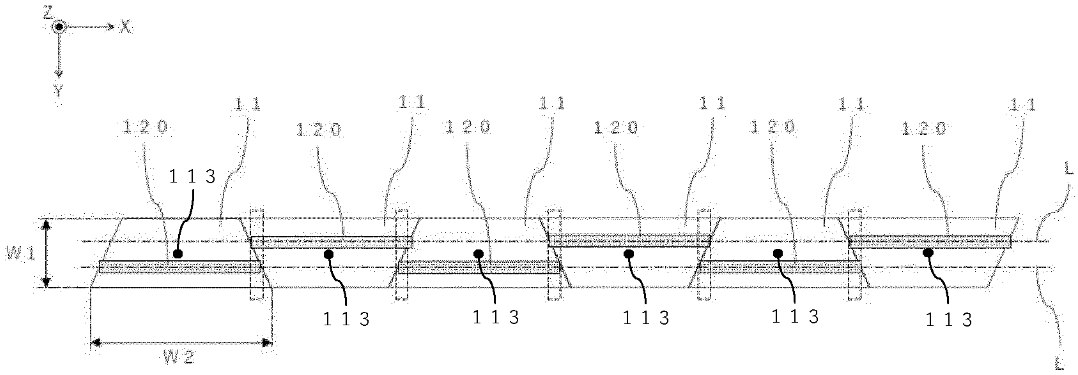

FIG. 12I

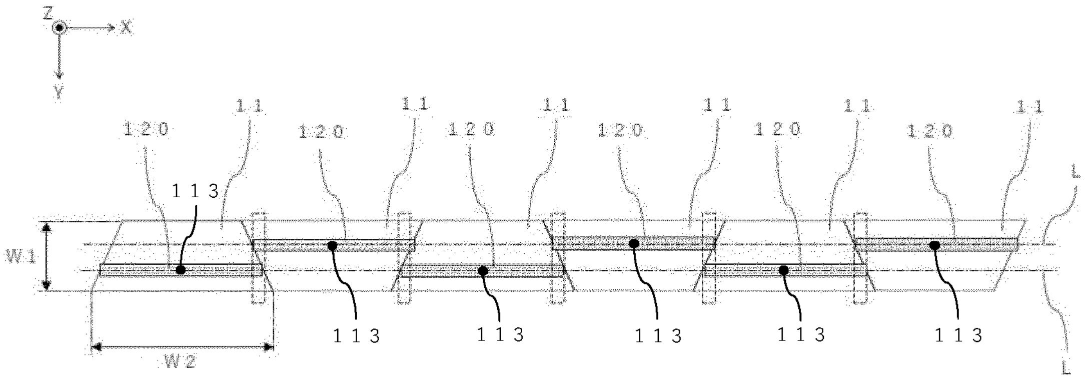

FIG. 13

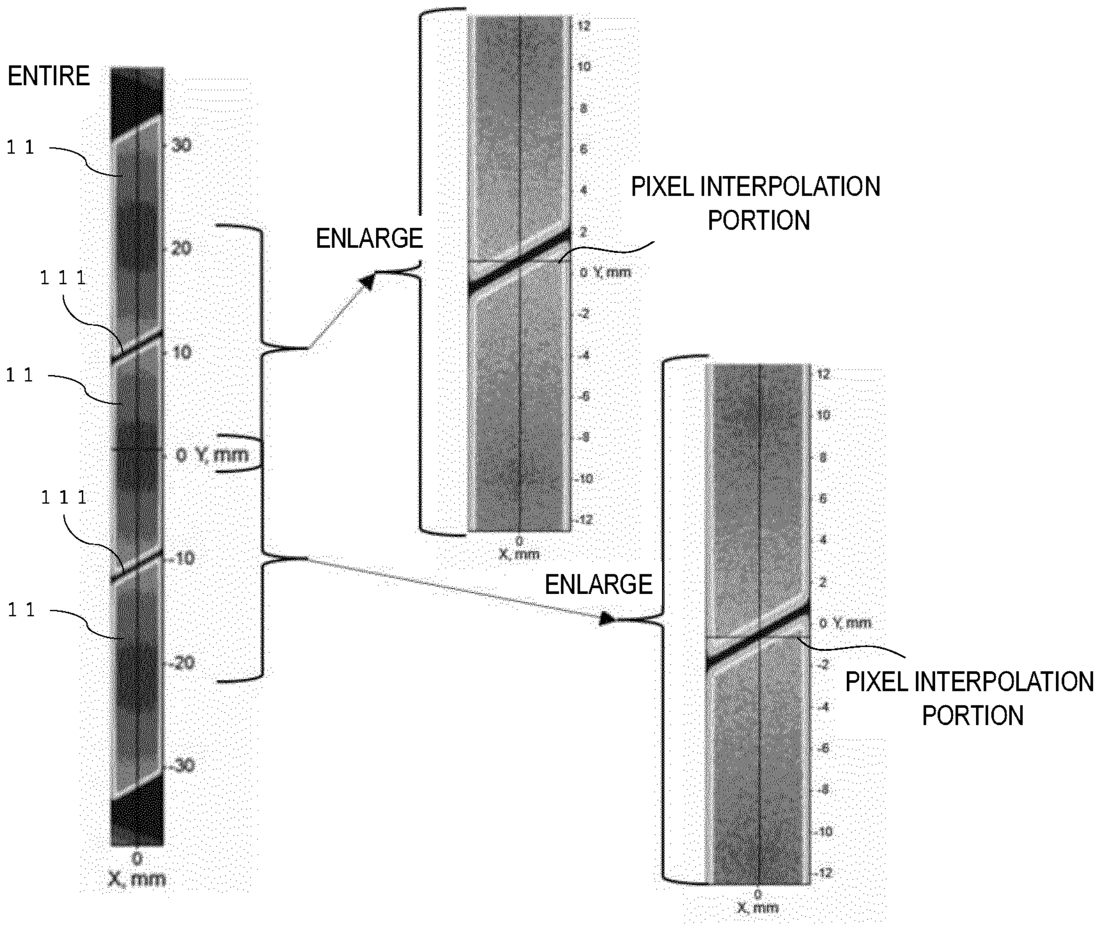
ENTIRE
1 1
1 1 1
1 1
1 1 1
1 1
30
20
10
0 Y, mm
-10
-20
-30
0
X, mm
ENLARGE
12
10
8
6
4
2
0 Y, mm
-2
-4
-6
-8
-10
-12
0
X, mm
PIXEL INTERPOLATION PORTION
ENLARGE
12
10
8
6
4
2
0 Y, mm
-2
-4
-6
-8
-10
-12
0
X, mm
PIXEL INTERPOLATION PORTION

FIG. 14

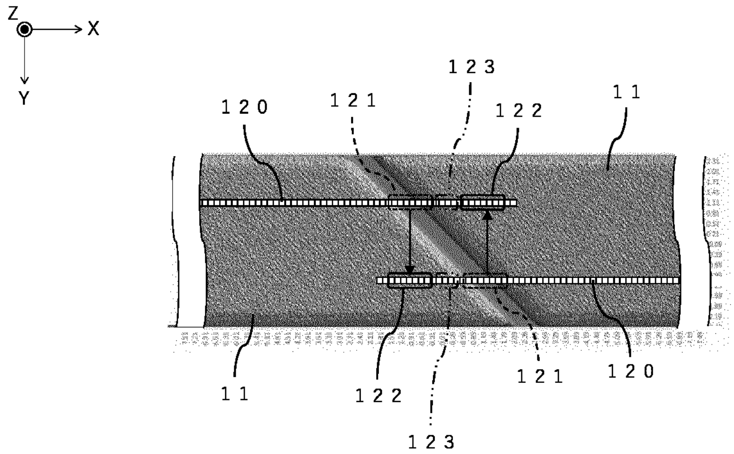

FIG. 15

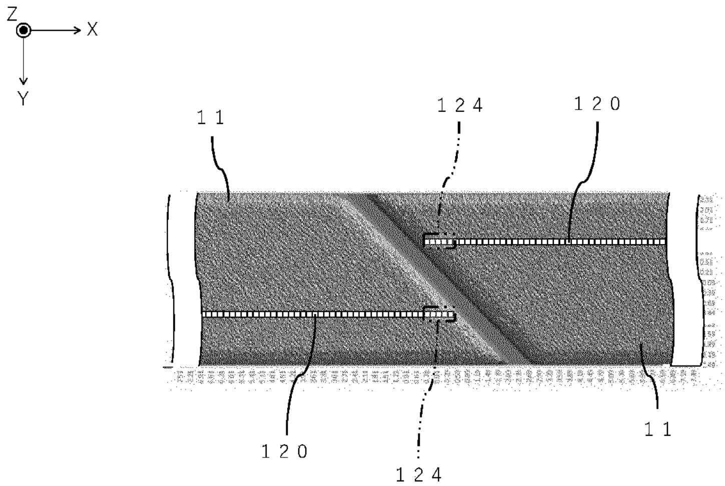

## INTERNATIONAL SEARCH REPORT

International application No.
**PCT/JP2023/012244**

**A. CLASSIFICATION OF SUBJECT MATTER**

***G01N 21/892***(2006.01)i; ***H04N 1/028***(2006.01)i; ***H04N 1/053***(2006.01)i; ***H04N 1/19***(2006.01)i
FI: G01N21/892 A; H04N1/053; H04N1/19; H04N1/028

According to International Patent Classification (IPC) or to both national classification and IPC

**B. FIELDS SEARCHED**

Minimum documentation searched (classification system followed by classification symbols)

G01N21/84-G01N21/958; H04N1/024-H04N1/207

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2022/004232 A1 (VIENEX CORP.) 06 January 2022 (2022-01-06) | 1-36 |
| A | WO 2022/034736 A1 (VIENEX CORP.) 17 February 2022 (2022-02-17) | 1-36 |
| A | JP 2001-242090 A (NKK CORP.) 07 September 2001 (2001-09-07) | 1-36 |
| A | JP 2010-107249 A (SAKI CORP.) 13 May 2010 (2010-05-13) | 1-36 |
| A | WO 2020/059426 A1 (TORAY INDUSTRIES, INC.) 26 March 2020 (2020-03-26) | 1-36 |
| A | JP 2010-164717 A (OKI DATA KK) 29 July 2010 (2010-07-29) | 1-36 |
| A | JP 2019-120540 A (TAKANO CO., LTD.) 22 July 2019 (2019-07-22) | 1-36 |
| A | JP 2003-106936 A (JAPAN SCIENCE AND TECHNOLOGY CORP.) 09 April 2003 (2003-04-09) | 1-36 |
| A | US 2011/0038038 A1 (SONY CORP.) 17 February 2011 (2011-02-17) | 1-36 |
| P, A | WO 2022/130736 A1 (VIENEX CORP.) 23 June 2022 (2022-06-23) | 1-36 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 April 2023** | **25 April 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/012244**

| Patent document cited in search report | Publication date (day/month/year) | Patent family member(s) | Publication date (day/month/year) |
|---|---|---|---|
| WO 2022/004232 A1 | 06 January 2022 | (Family: none) | |
| WO 2022/034736 A1 | 17 February 2022 | (Family: none) | |
| JP 2001-242090 A | 07 September 2001 | (Family: none) | |
| JP 2010-107249 A | 13 May 2010 | (Family: none) | |
| WO 2020/059426 A1 | 26 March 2020 | US 2021/0358109 A1<br>EP 3855172 A1<br>CN 112703393 A<br>KR 10-2021-0060466 A | |
| JP 2010-164717 A | 29 July 2010 | (Family: none) | |
| JP 2019-120540 A | 22 July 2019 | (Family: none) | |
| JP 2003-106936 A | 09 April 2003 | (Family: none) | |
| US 2011/0038038 A1 | 17 February 2011 | EP 2287639 A2<br>CN 101995659 A | |
| WO 2022/130736 A1 | 23 June 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018019334 A
- JP 2018152713 A
- JP 2009244500 A
- JP 2018022948 A
- JP 2009246623 A
- JP H514600 A